# EUROPEAN PATENT APPLICATION

(11) **EP 3 846 507 A1**
(43) Date of publication of application: **07.07.2021**
(21) Application number: 19868089.4
(22) Date of filing: 22.08.2019
(51) Int. Cl.: H04W 4/24

(54) **LOCAL AREA NETWORK COMMUNICATION METHOD, DEVICE, AND SYSTEM**

(30) Priority: 30.09.2018 CN 201811166308
(71) Applicant: HUAWEI TECHNOLOGIES CO., LTD., Shenzhen, Guangdong 518129 (CN)
(72) Inventor: ZHU, Qianghua, Shenzhen, Guangdong 518129 (CN); ZHANG, Yanping, Shenzhen, Guangdong 518129 (CN); YAO, Qi, Shenzhen, Guangdong 518129 (CN); WU, Wenfu, Shenzhen, Guangdong 518129 (CN)
(74) Representative: Grünecker Patent- und Rechtsanwälte PartG mbB
(86) International application number: PCT/CN2019/101980
(87) International publication number: WO 2020/063213

(57) **Abstract**

Embodiments of this application provide a local area network communication method, a device, and a system, so that when one session of a terminal is connected to a plurality of local area network services, communication of the terminal in one or more local area networks can be restricted based on a location of the terminal. The method includes: A session management network element obtains, in a session management process, an address or a virtual local area network identifier VID information of user equipment UE corresponding to each 5G local area network 5GLAN service accessed by a session, and obtains service area information of each 5GLAN service from a local area network controller LAN Controller. The SMF subscribes to, from a mobility management network element, a mobility event that is based on each 5GLAN service, and obtains a mobility event report that is based on a service area of the SMF, and a corresponding 5GLAN identifier. The SMF updates a rule of a corresponding session in a user plane network element based on the mobility event report.

## Description

This application claims priority to Chinese Patent Application No. 201811166308.8, filed with the China National Intellectual Property Administration on September 30, 2018 and entitled "LOCAL AREA NETWORK COMMUNICATION METHOD, DEVICE, AND SYSTEM", which is incorporated herein by reference in its entirety.

### TECHNICAL FIELD

This application relates to the field of communications technologies, and in particular, to a local area network communication method, a device, and a system.

### BACKGROUND

A fifth generation (5th generation, 5G) local area network (local area network, 5GLAN) service is a service provided by a current 5G network, and is mainly used in home communication, enterprise office working, factory manufacturing, internet of vehicles, power grid reconstruction, public security organs, and the like. The 5GLAN service is capable of providing private communication of an internet protocol (internet protocol, IP) type or a non-IP type (for example, an Ethernet type) for two or more terminals in a group of terminals. For example, devices in a factory may form a group, and the devices in the group may send Ethernet packets to each other; or office facilities (such as a mobile phone, a computer, or a notebook computer) of employees in a department of an enterprise form a group, and send IP packets to each other. If two terminals are not in a same group, the two terminals cannot communicate with each other.

The 5GLAN service has an area restriction, in other words, there is a service area of the 5GLAN. For example, the 5G network provides a specific 5GLAN service for a device in a specific factory. When the device moves out of a service area of the 5GLAN, the 5G network needs to prohibit, based on a location of the device, the device from using the 5GLAN service. When the device moves into the service area of the 5GLAN, the 5G network needs to provide the 5GLAN service for the device based on the location of the device.

In the prior art, one protocol data unit (protocol data unit, PDU) session of a terminal can only be associated with one data network. To restrict communication of the terminal in a 5GLAN based on a location of the terminal, a data network name (data network name, DNN) may be used to identify a 5GLAN service, and then a data network-related local area network data network (local area network data network, LADN) mechanism or an application function (application function, AF) influence (influence) mechanism may be used to restrict communication of the terminal in the 5GLAN based on the location of the terminal when one session is connected to one 5GALN service.

However, the LADN mechanism or the AF influence mechanism is at a session granularity, and the LADN mechanism or the AF influence mechanism is not available if one session can be connected to a plurality of 5GLAN services. In this case, how to restrict communication of the terminal in a service area of the 5GLAN based on the location of the terminal is an urgent problem to be resolved.

### SUMMARY

Embodiments of this application provide a local area network communication method, a device, and a system, so that when one session of a terminal is connected to a plurality of local area network services, communication of the terminal in one or more local area networks can be restricted based on a location of the terminal.

To achieve the foregoing obj ective, the following technical solutions are used in the embodiments of this application.

According to a first aspect, a local area network communication method is provided, and the method includes: A policy control network element receives a first event report from a session management network element, where the first event report includes a first event and indication information of a first local area network, and the first event includes that a terminal moves into or moves out of a service area of the first local area network; the policy control network element updates, based on the first event and the indication information, a first policy and charging control PCC rule corresponding to the terminal; and the policy control network element sends an updated first PCC rule to the session management network element. Based on this solution, because the policy control network element may update the first PCC rule corresponding to the terminal after receiving the first event report that includes the first event and the indication information of the first local area network, the session management network element may be triggered to modify a session of the terminal based on the updated first PCC rule. Therefore, when one session of the terminal is connected to a plurality of local area network services, communication of the terminal in one or more local area networks can be restricted based on a location of the terminal.

In a possible design, before the policy control network element receives the first event report from the session management network element, the method further includes: The policy control network element sends a first subscription request message to the session management network element, where the first subscription request message carries the indication information of the first local area network, and is used to request to subscribe to a mobility event that is of the terminal and that is related to the first local area network. Based on this solution, the policy control network element can subscribe to the mobility event that is of the terminal and that is related to the first local area network.

In a possible design, the first subscription request message further carries service area information of the first local area network.

In a possible design, that the policy control network element updates, based on the first event and the indication information, a first PCC rule corresponding to the terminal includes: The policy control network element determines an address of the terminal based on the indication information, and the policy control network element updates, based on the first event and the address that is of the terminal, the first PCC rule corresponding to the terminal. Based on this solution, the policy control network element can update the first PCC rule corresponding to the terminal.

In a possible design, that the policy control network element updates, based on the first event and the indication information, a first PCC rule corresponding to the terminal includes: The policy control network element determines a virtual local area network identifier that is of the terminal based on the indication information of the first local area network, and the policy control network element updates, based on the first event and the virtual local area network identifier that is of the terminal, the first PCC rule corresponding to the terminal. Based on this solution, the policy control network element can update the first PCC rule corresponding to the terminal.

According to a second aspect, a local area network communication method is provided, and the method includes: A session management network element sends a first event report to a policy control network element, where the first event report includes a first event and indication information of a first local area network, and the first event includes that a terminal moves into or moves out of a service area of the first local area network; the session management network element receives an updated first policy and charging control PCC rule corresponding to the terminal from the policy control network element; and the session management network element modifies a session of the terminal based on the updated first PCC rule. Based on this solution, after the session management network element sends the first event report that includes the first event and the indication information of the first local area network to the policy control network element, the policy control network element may send the updated first PCC rule to the session management network element after updating the first PCC rule, and the session management network element may modify the session of the terminal based on the updated first PCC rule. Therefore, when one session of the terminal is connected to a plurality of local area network services, communication of the terminal in one or more local area networks can be restricted based on a location of the terminal.

In a possible design, before the session management network element sends the first event report to the policy control network element, the method further includes: The session management network element receives a first subscription request message from the policy control network element, where the first subscription request message carries the indication information of the first local area network, and is used to request to subscribe to a mobility event that is of the terminal and that is related to the first local area network. Based on this solution, the policy control network element can subscribe to the mobility event that is of the terminal and that is related to the first local area network.

In a possible design, the first subscription request message further carries service area information of the first local area network.

In a possible design, that the session management network element modifies a session of the terminal based on the updated first PCC rule includes: If the updated first PCC rule indicates that the terminal is allowed to route data in the first local area network, the session management network element indicates a user plane function network element to set a first routing rule, where the first routing rule includes an address of the terminal or a virtual local area network identifier that is of the terminal. Based on this solution, the session management network element can modify the session of the terminal based on the location of the terminal.

In a possible design, the method further includes: If the session of the terminal has been deactivated, the session management network element activates a user plane connection of the session of the terminal. Based on this solution, the session management network element can modify the session of the terminal based on the location of the terminal.

In a possible design, that the session management network element modifies a session of the terminal based on the updated first PCC rule includes: If the updated first PCC rule indicates that the terminal is not allowed to route data in the first local area network, the session management network element indicates a user plane function network element to delete a first routing rule, where the first routing rule includes an address of the terminal or a virtual local area network identifier that is of the terminal. Based on this solution, the session management network element can modify the session of the terminal based on the location of the terminal.

In a possible design, the method further includes: If the session of the terminal is allowed to access only the first local area network, the session management network element deactivates a user plane connection of the session of the terminal or directly releases the session of the terminal. Based on this solution, the session management network element can modify the session of the terminal based on the location of the terminal.

According to a third aspect, a local area network communication method is provided, and the method includes: A session management network element receives a first event report from a mobility management network element, where the first event report includes a first event and indication information of a first local area network, and the first event includes that a terminal moves into or moves out of a service area of the first local area network; and the session management network element modifies a session of the terminal based on the first event and the indication information of the first local area network. Based on this solution, the session management network element may receive the first event report that includes the first event and the indication information of the first local area network, and may modify the session of the terminal based on the first event and the indication information of the first local area network. Therefore, when one session of the terminal is connected to a plurality of local area network services, communication of the terminal in one or more local area networks can be restricted based on a location of the terminal.

In a possible design, before the session management network element receives the first event report from the mobility management network element, the method further includes: The session management network element sends a first subscription request message to the mobility management network element, where the first subscription request message carries the indication information of the first local area network, and is used to request to subscribe to a mobility event that is of the terminal and that is related to the first local area network. Based on this solution, the session management network element can subscribe to the mobility event that is of the terminal and that is related to the first local area network.

In a possible design, the first subscription request message further carries service area information of the first local area network.

In a possible design, that the session management network element modifies a session of the terminal based on the first event and the indication information of the first local area network includes: If the session management network element determines, based on the first event and the indication information of the first local area network, that the terminal is allowed to route data in the first local area network, the session management network element indicates a user plane function network element to set a first routing rule, where the first routing rule includes an address of the terminal or a virtual local area network identifier that is of the terminal. Based on this solution, the session management network element can modify the session of the terminal based on the location of the terminal.

In a possible design, the method further includes: If the session of the terminal has been deactivated, the session management network element activates a user plane connection of the session of the terminal. Based on this solution, the session management network element can modify the session of the terminal based on the location of the terminal.

In a possible design, that the session management network element modifies a session of the terminal based on the first event and the indication information of the first local area network includes: If the session management network element determines, based on the first event and the indication information of the first local area network, that the terminal is not allowed to route data in the first local area network, the session management network element indicates a user plane function network element to delete a first routing rule, where the first routing rule includes an address of the terminal or a virtual local area network identifier that is of the terminal. Based on this solution, the session management network element can modify the session of the terminal based on the location of the terminal.

In a possible design, the method further includes: If the session of the terminal is allowed to access only the first local area network, the session management network element deactivates a user plane connection of the session of the terminal or directly releases the session of the terminal. Based on this solution, the session management network element can modify the session of the terminal based on the location of the terminal.

According to a fourth aspect, a policy control network element is provided, and the policy control network element has a function of implementing the method in the first aspect. The function may be implemented by hardware, or may be implemented by hardware by executing corresponding software. The hardware or software includes one or more modules corresponding to the foregoing function.

According to a fifth aspect, a policy control network element is provided, and includes a processor and a memory. The memory is configured to store a computer-executable instruction. When the policy control network element runs, the processor executes the computer-executable instruction stored in the memory, so that the policy control network element performs the local area network communication method according to any implementation of the first aspect.

According to a sixth aspect, a policy control network element is provided, and includes a processor. The processor is configured to: be coupled to a memory, and after reading an instruction in the memory, perform, according to the instruction, the local area network communication method according to any implementation of the first aspect.

According to a seventh aspect, a computer-readable storage medium is provided. The computer-readable storage medium stores an instruction, and when the instruction runs on a computer, the computer is enabled to perform the local area network communication method according to any implementation of the first aspect.

According to an eighth aspect, a computer program product including an instruction is provided, and when the computer program product runs on a computer, the computer is enabled to perform the local area network communication method according to any implementation of the first aspect.

According to a ninth aspect, an apparatus (for example, the apparatus may be a chip system) is provided, and the apparatus includes a processor, configured to support a policy control network element in implementing functions involved in the first aspect, for example, updating, based on the first event and the indication information, the first policy and charging control PCC rule corresponding to the terminal. In a possible design, the apparatus further includes a memory, and the memory is configured to store a program instruction and data that are necessary for the policy control network element. When the apparatus is the chip system, the apparatus may include a chip, or may include a chip and another discrete device.

For technical effects brought by any design manner in the fourth aspect to the ninth aspect, refer to technical effects brought by different design manners in the first aspect. Details are not described herein.

According to a tenth aspect, a session management network element is provided, and the session management network element has a function of implementing the method in the second aspect or the third aspect. The function may be implemented by hardware, or may be implemented by hardware by executing corresponding software. The hardware or software includes one or more modules corresponding to the foregoing function.

According to an eleventh aspect, a session management network element is provided, and includes a processor and a memory. The memory is configured to store a computer-executable instruction. When the session management network element runs, the processor executes the computer-executable instruction stored in the memory, so that the session management network element performs the local area network communication method according to any implementation of the second aspect or the third aspect.

According to a twelfth aspect, a session management network element is provided, and includes a processor. The processor is configured to: be coupled to a memory, and after reading an instruction in the memory, perform, according to the instruction, the local area network communication method according to any implementation of the second aspect or the third aspect.

According to a thirteenth aspect, a computer-readable storage medium is provided. The computer-readable storage medium stores an instruction, and when the instruction runs on a computer, the computer is enabled to perform the quality of service detection method according to any implementation of the second aspect or the third aspect.

According to a fourteenth aspect, a computer program product including an instruction is provided, and when the computer program product runs on a computer, the computer is enabled to perform the local area network communication method according to any implementation of the second aspect or the third aspect.

According to a fifteenth aspect, an apparatus (for example, the apparatus may be a chip system) is provided, and the apparatus includes a processor, configured to support a session management network element in implementing functions involved in the second aspect or the third aspect, for example, updating, based on the first event and the indication information, the first policy and charging control PCC rule corresponding to the terminal. In a possible design, the apparatus further includes a memory, and the memory is configured to store a program instruction and data that are necessary for the session management network element. When the apparatus is the chip system, the apparatus may include a chip, or may include a chip and another discrete device.

For technical effects brought by any design manner in the tenth aspect to the fifteenth aspect, refer to technical effects brought by different design manners in the second aspect or the third aspect. Details are not described herein.

According to a sixteenth aspect, a communications system is provided, and the communications system includes a session management network element. The session management network element is configured to perform steps performed by the session management network element in the second aspect or the third aspect, or in the solutions provided in the embodiments of this application.

In a possible design, the communications system further includes a policy control network element. The policy control network element is configured to perform steps performed by the policy control network element in the first aspect or the solutions provided in the embodiments of this application.

In a possible design, the communications system may further include another device that interacts with the policy control network element or the session management network element in the solutions provided in the embodiments of this application, such as a mobility management network element or a user plane function network element. This is not specifically limited in this embodiment of this application.

These or other aspects of this application are more concise and easier to understand in the descriptions of the following embodiments.

### BRIEF DESCRIPTION OF DRAWINGS

FIG. 1 is a schematic structural diagram 1 of a communications system according to an embodiment of this application;
FIG. 2 is a schematic structural diagram 2 of a communications system according to an embodiment of this application;
FIG. 3 is a schematic diagram of application of a communications system in a 5G network according to an embodiment of this application;
FIG. 4 is a schematic diagram of a user plane architecture of an existing 5GLAN service;
FIG. 5 is a schematic structural diagram of a communications device according to an embodiment of this application;
FIG. 6 is a schematic flowchart 1 of a local area network communication method according to an embodiment of this application;
FIG. 7 is a schematic flowchart 2 of a local area network communication method according to an embodiment of this application;
FIG. 8 is a schematic flowchart 3 of a local area network communication method according to an embodiment of this application;
FIG. 9 is a schematic structural diagram of a policy control network element according to an embodiment of this application; and
FIG. 10 is a schematic structural diagram of a session management network element according to an embodiment of this application.

### DESCRIPTION OF EMBODIMENTS

The following describes the technical solutions in the embodiments of this application with reference to the accompanying drawings in the embodiments of this application. In the descriptions of this application, unless otherwise stated, "/" indicates an "or" relationship between associated objects, for example, A/B may represent A or B. In this application, "and/or" describes only an association relationship for describing associated objects and represents that three relationships may exist. For example, A and/or B may represent the following three cases: Only A exists, both A and B exist, and only B exists, where A and B may be singular numbers or plural numbers. In addition, in the descriptions of this application, "a plurality of' means two or more than two. "At least one of the following items" or a similar expression means any combination of these items, including any combination of a single item or a plurality of items. For example, at least one of a, b, or c may represent a, b, c, a-b, a-c, b-c, or a-b-c, where a, b, and c may be single, or may be multiple. In addition, to clearly describe the technical solutions in the embodiments of this application, terms such as "first" and "second" are used in the embodiments of this application to distinguish between same items or similar items that have basically same functions and purposes. A person skilled in the art may understand that words such as "first" and "second" do not limit a quantity and an execution order, and the words such as "first" and "second" do not limit an absolute difference.

In addition, the network architecture and the service scenario described in the embodiments of this application are intended to describe the technical solutions in the embodiments of this application more clearly, and do not constitute a limitation on the technical solutions provided in the embodiments of this application. A person of ordinary skill in the art may know that, with the evolution of the network architecture and the emergence of new service scenarios, the technical solutions provided in the embodiments of this application are also applicable to similar technical problems.

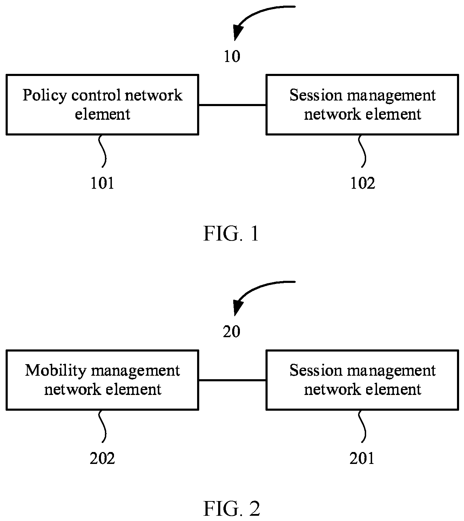

FIG. 1 shows a communications system 10 provided in an embodiment of this application. The communications system 10 includes a policy control network element 101 and a session management network element 102.

The session management network element 102 is configured to send a first event report (event report) to the policy control network element 101. The first event report includes a first event and indication information of a first local area network, and the first event includes that a terminal moves into or moves out of a service area of the first local area network.

The policy control network element 101 is configured to: receive the first event report from the session management network element 102, and after updating, based on the first event and the indication information of the first local area network that are in the first event report, a first policy and charging control (policy and charging control, PCC) rule corresponding to the terminal, send an updated first PCC rule to the session management network element 102.

The session management network element 102 is configured to receive the updated first PCC rule from the policy control network element 101, and modify a session of the terminal based on the updated first PCC rule.

Optionally, the first event report in this embodiment of this application may be alternatively replaced with a first mobility event report (mobility event report) or another name. This is not specifically limited in this embodiment of this application.

Optionally, in this embodiment of this application, the indication information of the first local area network may be, for example, an identifier of the first local area network or a first presence reporting area (presence reporting area, PRA) identifier (identify, ID) corresponding to the first local area network. This is not specifically limited in this embodiment of this application.

Optionally, in this embodiment of this application, for related implementation in which the session management network element 102 modifies the session of the terminal based on the updated first PCC rule, refer to subsequent method embodiments. Details are not described herein.

Optionally, in this embodiment of this application, the policy control network element 101 may communicate with the session management network element 102 directly or via forwarding of another device. This is not specifically limited in this embodiment of this application.

Based on the communications system provided in this embodiment of this application, because the policy control network element may update the first PCC rule corresponding to the terminal after receiving the first event report that includes the first event and the indication information of the first local area network, the session management network element may be triggered to modify the session of the terminal based on the updated first PCC rule. Therefore, when one session of the terminal is connected to a plurality of local area network services, communication of the terminal in one or more local area networks can be restricted based on a location of the terminal.

Alternatively, optionally, FIG. 2 shows another communications system 20 provided in an embodiment of this application. The communications system 20 includes a session management network element 201 and a mobility management network element 202.

The mobility management network element 202 is configured to send a first event report to the session management network element 201. The first event report includes a first event and indication information of a first local area network, and the first event includes that a terminal moves into or moves out of a service area of the first local area network.

The session management network element 201 is configured to: receive the first event report from the mobility management network element 202, and modify a session of the terminal based on the first event and the indication information of the first local area network that are in the first event report.

For related descriptions of the indication information of the first local area network, refer to the foregoing embodiment. Details are not described herein.

Optionally, in this embodiment of this application, for related implementation in which the session management network element 102 modifies the session of the terminal based on the first event and the indication information of the first local area network that are in the first event report, refer to subsequent method embodiments. Details are not described herein.

Optionally, in this embodiment of this application, the session management network element 201 may communicate with the mobility management network element 202 directly or via forwarding of another device. This is not specifically limited in this embodiment of this application.

Based on the communications system provided in this embodiment of this application, after receiving the first event report that includes the first event and the indication information of the first local area network, the session management network element may modify the session of the terminal based on the indication information of the first local area network and the first event. Therefore, when one session of the terminal is connected to a plurality of local area network services, communication of the terminal in one or more local area networks can be restricted based on a location of the terminal.

Optionally, the communications system shown in FIG. 1 or FIG. 2 may be applied to a current 5G network or another future network. This is not specifically limited in this embodiment of this application.

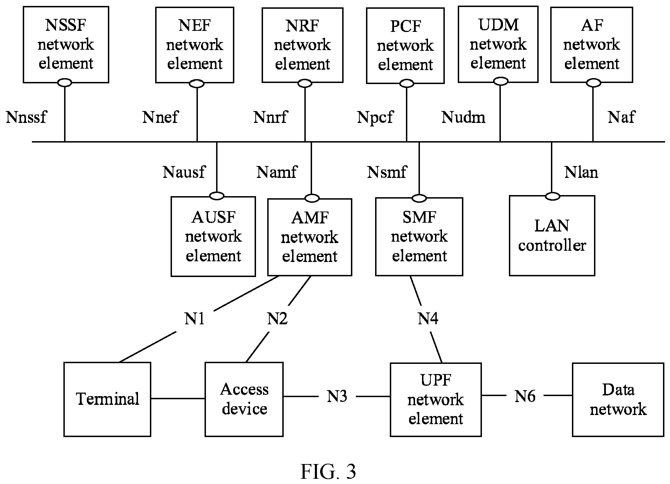

For example, as shown in FIG. 3, if the communications system shown in FIG. 1 or FIG. 2 is applied to the current 5G network, a network element or an entity corresponding to the policy control network element 101 in FIG. 1 may be a policy control function (policy control function, PCF) network element in a 5G network architecture, a network element or an entity corresponding to the session management network element 102 in FIG. 1 or the session management network element 201 in FIG. 2 may be a session management function (session management function, SMF) network element in the 5G network architecture, and a network element or an entity corresponding to the mobility management network element 202 in FIG. 2 may be an access and mobility management function (core access and mobility management function, AMF) network element in the 5G network architecture.

In addition, if the communications system shown in FIG. 1 or FIG. 2 may be applied to the current 5G network, the first local area network may be a 5GLAN. Optionally, in terms of an expression manner, in this embodiment of this application, the 5GLAN may also be referred to as a LAN, a LAN-type service (type service), a LAN-virtual network (virtual network, VN), a 5GLAN-type service, a 5GLAN-VN, a 5GLAN group (group), or a LAN group. A name of the 5GLAN in this embodiment of this application is not specifically limited.

In addition, as shown in FIG. 3, the current 5G network may further include an access device, a user plane function (user plane function, UPF) network element, an authentication server function (authentication server function, AUSF) network element, a network slice selection function (network slice selection function, NSSF) network element, a network exposure function (network exposure function, NEF) network element, a network function repository function (network exposure function Repository Function, NRF) network element, a unified data management (Unified Data Management, UDM) network element, an application function (application function, AF) network element, a LAN controller (controller), and the like. This is not specifically limited in this embodiment of this application.

The LAN controller is a network element newly added to the 5G network in this embodiment of this application, and is responsible for managing the 5GLAN, including creating, modifying, and deleting configuration information of the 5GLAN, and may also be responsible for performing authentication and authorization on a terminal that accesses the 5GLAN, managing a user plane path of the 5GLAN, and the like. For specific functions, refer to subsequent method embodiments. Details are not described herein.

Optionally, in terms of an expression manner, the LAN controller may also have another name, such as a group management function (group management function, GMF) network element, a LAN management function (management function) network element, a LAN service management function (LAN service management function, LSMF) network element, a 5GLAN group management function (5GLAN group management function, 5GMF) network element, a 5GLAN management function (management function) network element, a LAN service management function (5GLAN Service Management Function, 5SMF) network element, a 5GLAN virtual network management function (5GLAN-VN management function, 5LVMF) network element, a 5GLAN service management function (5GLAN-type service management function, 5LSMF) network element, or a LAN virtual network management function (LAN-VN management function, LVNMF) network element. This is not specifically limited in this embodiment of this application.

As shown in FIG. 3, the terminal accesses the 5G network through the access device, the terminal communicates with an AMF network element through a next generation network (next generation, N) 1 interface (N1 for short), the access device communicates with the AMF network element through an N2 interface (N2 for short), the access device communicates with the UPF network element through an N3 interface (N3 for short), an SMF network element communicates with the UPF network element through an N4 interface (N4 for short), and the UPF network element accesses a data network through an N6 interface (N6 for short). In addition, control plane network elements such as the AUSF network element, the AMF network element, the SMF network element, the NSSF network element, the NEF network element, the NRF network element, the PCF network element, the UDM network element, or the AF network element shown in FIG. 2 may perform interaction through a service-oriented interface. For example, a service-oriented interface provided by the AUSF network element may be Nausf, a service-oriented interface provided by the AMF network element may be Namf, a service-oriented interface provided by the SMF network element may be Nsmf, a service-oriented interface provided by the NSSG network element may be Nnssf, a service-oriented interface provided by the NEF network element may be Nnef, a service-oriented interface provided by the NRF network element may be Nnrf, a service-oriented interface provided by the PCF network element may be Npcf, a service-oriented interface provided by the UDM network function may be Nudm, and a service-oriented interface provided by the AF network element may be Naf. For related descriptions, refer to a 5G system architecture (5G system architecture) diagram in the 23501 standard. Details are not described herein. In addition, a service-oriented interface provided by the LAN controller may be Nlan.

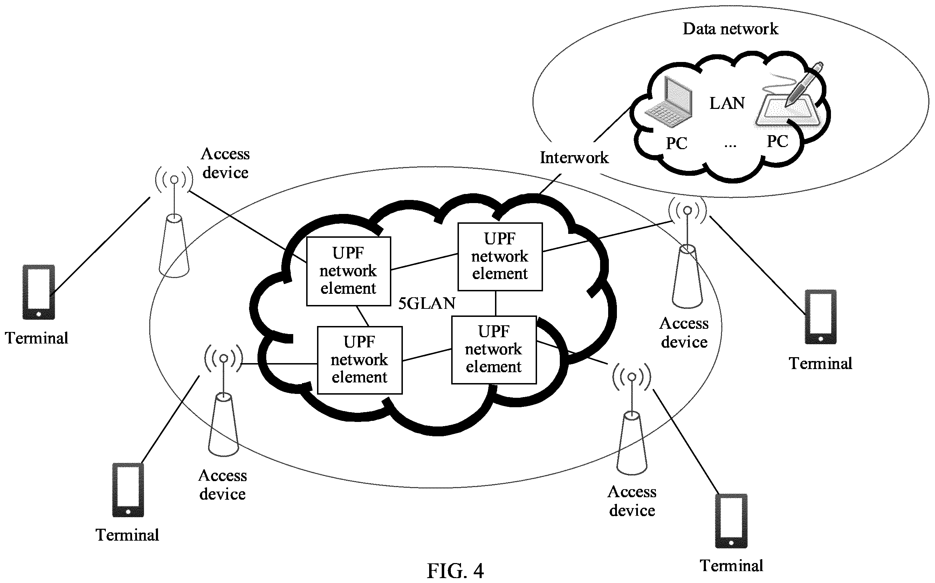

FIG. 4 is a schematic diagram of a user plane architecture of an existing 5GLAN service. A terminal sets up a session to a UPF network element that provides the 5GLAN service, to access the UPF network element that provides the 5GLAN service. As described above, the UPF network element that provides the 5GLAN service can interwork with an existing LAN in a data network through N6, for example, communicate with a personal computer (personal computer, PC) in the LAN. Alternatively, the UPF network element that provides the 5GLAN service may be associated with sessions of different terminals by using an internal connection between UPF network elements, to implement private communication. This is not specifically limited in this embodiment of this application.

Optionally, the terminal (terminal) involved in the embodiments of this application may include various handheld devices with a wireless communication function, in-vehicle devices, wearable devices, computing devices, or other processing devices connected to a wireless modem, and may further include a subscriber unit (subscriber unit), a cellular phone (cellular phone), a smartphone (smart phone), a wireless data card, a personal digital assistant (personal digital assistant, PDA) computer, a tablet computer, a wireless modem (modem), a handheld device (handheld), a laptop computer (laptop computer), a cordless phone (cordless phone) or a wireless local loop (wireless local loop, WLL) station, a machine type communication (machine type communication, MTC) terminal, user equipment (user equipment, UE), a mobile station (mobile station, MS), a terminal device (terminal device), or relay user equipment. The relay user equipment may be, for example, a 5G residential gateway (residential gateway, RG). For ease of description, the devices mentioned above are collectively referred to as a terminal in this application.

Optionally, the access device (including the foregoing first access device or second access device) involved in the embodiments of this application is a device that accesses a core network, for example, may be a base station, a broadband network gateway (broadband network gateway, BNG), an aggregation switch, or a non-3rd generation partnership project (3rd generation partnership project, 3GPP) access device. The base station may include base stations in various forms, for example, a macro base station, a micro base station (also referred to as a small cell), a relay station, and an access point.

Optionally, in the embodiments of this application, the policy control network element or the session management network element in FIG. 1 or the session management network element or the mobility management network element in FIG. 2 may be implemented by one device, or may be implemented by a plurality of devices together, or may be a function module in a device. This is not specifically limited in this embodiment of this application. It may be understood that the foregoing function may be a network element in a hardware device, a software function running on dedicated hardware, or a virtualized function instantiated on a platform (for example, a cloud platform).

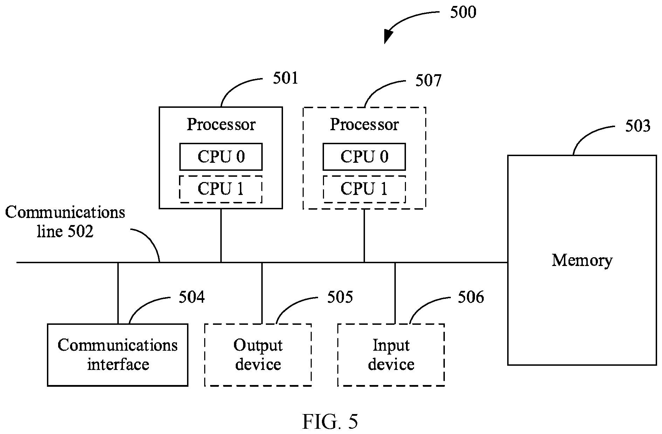

For example, in the embodiments of this application, the policy control network element or the session management network element in FIG. 1 or the session management network element or the mobility management network element in FIG. 2 may be implemented by a communications device 500 in FIG. 5. FIG. 5 is a schematic diagram of a hardware structure of a communications device according to an embodiment of this application. The communications device 500 includes a processor 501, a communications line 502, a memory 503, and at least one communications interface (FIG. 5 is described only by using an example in which a communications interface 504 is included).

The processor 501 may be a general central processing unit (central processing unit, CPU), a microprocessor, an application-specific integrated circuit (application-specific integrated circuit, ASIC), or one or more integrated circuits configured to control program execution of the solutions of this application.

The communications line 502 may include a channel for transmitting information between the foregoing components.

The communications interface 504 is configured to communicate with another device or a communications network such as an Ethernet, a radio access network (radio access network, RAN), or a wireless local area network (wireless local area networks, WLAN) by using any apparatus such as a transceiver.

The memory 503 may be a read-only memory (read-only memory, ROM) or another type of static storage device that can store static information and an instruction, a random access memory (random access memory, RAM) or another type of dynamic storage device that can store information and an instruction, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and is connected to the processor by using the communications line 502. The memory may be alternatively integrated with the processor.

The memory 503 is configured to store a computer-executable instruction for executing the solutions in this application, and execution is controlled by the processor 501. The processor 501 is configured to execute the computer-executable instruction stored in the memory 503, to implement the local area network communication method provided in the following embodiments of this application.

Optionally, the computer-executable instruction in this embodiment of this application may also be referred to as application program code, and this is not specifically limited in this embodiment of this application.

In specific implementation, in an embodiment, the processor 501 may include one or more CPUs, for example, a CPU 0 and a CPU 1 in FIG. 5.

In specific implementation, in an embodiment, the communications device 500 may include a plurality of processors, for example, the processor 501 and a processor 507 in FIG. 5. Each of these processors may be a single-core (single-CPU) processor, or may be a multi-core (multi-CPU) processor. The processor herein may be one or more devices, circuits, and/or processing cores used for processing data (for example, a computer program instruction).

In specific implementation, in an embodiment, the communications device 500 may further include an output device 505 and an input device 506. The output device 505 communicates with the processor 501, and may display information in a plurality of manners. For example, the output device 505 may be a liquid crystal display (liquid crystal display, LCD), a light emitting diode (light emitting diode, LED) display device, a cathode ray tube (cathode ray tube, CRT) display device, or a projector (projector). The input device 506 communicates with the processor 501, and may receive user input in a plurality of manners. For example, the input device 506 may be a mouse, a keyboard, a touchscreen device, or a sensing device.

The communications device 500 may be a general device or a dedicated device. In specific implementation, the communications device 500 may be a desktop computer, a portable computer, a network server, a palmtop computer (personal digital assistant, PDA), a mobile phone, a tablet computer, a wireless terminal device, an embedded device, or a device having a similar structure in FIG. 5. A type of the communications device 500 is not limited in this embodiment of this application.

A local area network communication method provided in the embodiments of this application is specifically described below with reference to FIG. 1 to FIG. 5.

It should be noted that, in the following embodiments of this application, a name of a message between network elements or a name or the like of each parameter in the message is merely an example, and may also be another name in specific implementation. This is not specifically limited in this embodiment of this application.

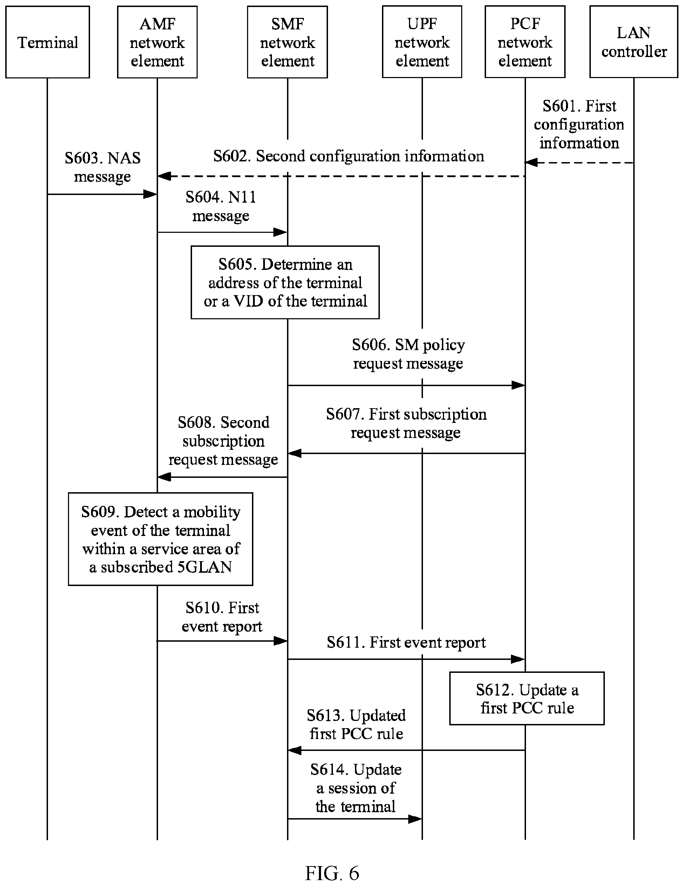

First, for example, the communications system shown in FIG. 1 is applied to the 5G network shown in FIG. 3. FIG. 6 shows a local area network communication method according to an embodiment of this application. The local area network communication method optionally includes the following steps S601 and S602.

S601: A LAN controller sends first configuration (configure) information to a PCF network element.

Accordingly, the PCF network element receives the first configuration information from the LAN controller.

Optionally, in this embodiment of this application, the first configuration information may include a 5GLAN ID and service area information corresponding to the 5GLAN ID, or the first configuration information may include a PRA ID and service area information corresponding to the PRA ID. This is not specifically limited in this embodiment of this application.

Optionally, in this embodiment of this application, the service area information is used to identify a specific service area of a 5GLAN. The service area information may be, for example, geographical location information, tracking area (tracking area, TA) information, or cell (cell) information. This is not specifically limited in this embodiment of this application. Optionally, the TA information in this embodiment of this application may be, for example, a TA identifier, or the cell information may be, for example, a cell identifier. This is not specifically limited in this embodiment of this application.

Optionally, in this embodiment of this application, if the first configuration information includes the 5GLAN ID and the service area information corresponding to the 5GLAN ID, there may be one or more 5GLAN IDs in the first configuration information, and accordingly, there may be one or more pieces of service area information corresponding to the 5GLAN ID, where one 5GLAN ID corresponds to one piece of service area information. This is uniformly described herein, and details are not described below. For example, the first configuration information may be shown in Table 1.

**Table 1**

| 5GLAN ID | Service area information |
|---|---|
| 5GLAN ID 1 | Service area information 1 |
| 5GLAN ID 2 | Service area information 2 |
| 5GLAN ID 3 | Service area information 3 |
| ... | ... |

It should be noted that Table 1 merely provides an example of a table storage form of the first configuration information (including the 5GLAN ID and the service area information). Certainly, when the first configuration information is stored, there may be another table storage manner or another non-table storage manner. This is not specifically limited in this embodiment of this application.

Alternatively, optionally, in this embodiment of this application, if the first configuration information includes the PRA ID and the service area information corresponding to the PRA ID, there may be one or more PRA IDs in the first configuration information, and accordingly, there may be one or more pieces of service area information corresponding to the PRA ID, where one PRA ID corresponds to one piece of service area information. This is uniformly described herein, and details are not described below. For example, the first configuration information may be shown in Table 2.

**Table 2**

| PRA ID | Service area information |
|---|---|
| PRA ID 1 | Service area information 1 |
| PRA ID 2 | Service area information 2 |
| PRA ID 3 | Service area information 3 |
| ... | ... |

It should be noted that Table 2 merely provides an example of a table storage form of the first configuration information (including the PRA ID and the service area information). Certainly, when the first configuration information is stored, there may be another table storage manner or another non-table storage manner. This is not specifically limited in this embodiment of this application.

Optionally, in this embodiment of this application, the first configuration information may further include a data network name (data network name, DNN) corresponding to the 5GLAN ID. This is not specifically limited in this embodiment of this application.

For example, the first configuration information includes the 5GLAN ID and the service area information corresponding to the 5GLAN ID. When the first configuration information includes a plurality of 5GLAN IDs, different 5GLAN IDs may correspond to different DNNs. For example, as shown in Table 3, a 5GLAN ID 1 and a 5GLAN ID 2 may correspond to a DNN 1, and a 5GLAN ID 3 may correspond to a DNN 2.

**Table 3**

| DNN | 5GLAN ID | Service area information |
|---|---|---|
| DNN 1 | 5GLAN ID 1 | Service area information 1 |
| | 5GLAN ID 2 | Service area information 2 |
| DNN 2 | 5GLAN ID 3 | Service area information 3 |
| ... | ... | ... |

Alternatively, for example, the first configuration information includes the 5GLAN ID and the service area information corresponding to the 5GLAN ID. When the first configuration information includes a plurality of 5GLAN IDs, the plurality of 5GLAN IDs may correspond to a same DNN, in other words, the first configuration information may be configuration information for one data network. For example, as shown in Table 4, a 5GLAN ID 1, a 5GLAN ID 2, a 5GLAN ID 3, and the like may all correspond to a DNN 1.

**Table 4**

| DNN | 5GLAN ID | Service area information |
|---|---|---|
| DNN 1 | 5GLAN ID 1 | Service area information 1 |
| | 5GLAN ID 2 | Service area information 2 |
| | 5GLAN ID 3 | Service area information 3 |
| | ... | ... |

It should be noted that Table 3 or Table 4 merely provides an example of a table storage form of the first configuration information (including the DNN, the 5GLAN ID, and the service area information). Certainly, when the first configuration information is stored, there may be another table storage manner or another non-table storage manner. This is not specifically limited in this embodiment of this application.

Optionally, if the first configuration information includes the PRA ID and the service area information corresponding to the PRA ID, only the 5GLAN ID in Table 3 or Table 4 needs to be replaced with a corresponding PRA ID, and details are not described herein.

In this embodiment of this application, the 5GLAN ID may be understood as an identifier of a 5GLAN group. In other words, the 5GLAN ID may be used to identify a 5GLAN group, a 5GLAN-VN, or a specific 5GLAN service. Terminals that use a same 5GLAN ID belong to a same 5GLAN group, and a 5GLAN service corresponding to the 5GLAN ID or a 5GLAN-VN corresponding to the 5GLAN ID may be used, in other words, 5GLAN private communication may be performed between the terminals that use the same 5GLAN ID. This is uniformly described herein, and details are not described below.

Optionally, in terms of a format, the 5GLAN ID may be a special domain name (for example, a data network name (data network name, DNN)), a fully qualified domain name (fully qualified domain name, FQDN), a VID, a character string, an internal group identifier (internal group identifier), an external group identifier (external group identifier), or a serial number. In addition, the LAN ID may alternatively use some special formats, for example, the LAN ID may further include provider information, operator information, network information, domain information, and the like. This is not specifically limited in this embodiment of this application.

S602: The PCF network element sends second configuration information to an AMF network element.

Accordingly, the AMF network element receives the second configuration information from the PCF network element.

Optionally, in this embodiment of this application, if the first configuration information includes the 5GLAN ID and the service area information corresponding to the 5GLAN ID, the second configuration information may accordingly include, for example, the 5GLAN ID and the service area information corresponding to the 5GLAN ID. For example, the second configuration information may be shown in Table 1.

Alternatively, in this embodiment of this application, if the first configuration information includes the 5GLAN ID and the service area information corresponding to the 5GLAN ID, the second configuration information may accordingly include, for example, the PRA ID and the service area information corresponding to the PRA ID. In this case, the PRA ID herein may be the 5GLAN ID, or may be determined by the PCF network element based on the 5GLAN ID. This is not specifically limited in this embodiment of this application. In other words, when the PRA ID is not the 5GLAN ID, the PCF network element may learn a correspondence between a 5GLAN ID and a PRA ID, and one PRA ID corresponds to one 5GLAN ID. For example, the correspondence between a 5GLAN ID and a PRA ID may be shown in Table 5.

**Table 5**

| 5GLAN ID | PRA ID |
|---|---|
| 5GLAN ID 1 | PRA ID 1 |
| 5GLAN ID 2 | PRA ID 2 |
| 5GLAN ID 3 | PRA ID 3 |
| ... | ... |

It should be noted that Table 5 merely provides an example of a table storage form of the correspondence between a 5GLAN ID and a PRA ID. Certainly, when the correspondence between a 5GLAN ID and a PRA ID is stored, there may be another table storage manner or another non-table storage manner. This is not specifically limited in this embodiment of this application.

Optionally, in this embodiment of this application, the correspondence between a 5GLAN ID and a PRA ID may be preconfigured on the PCF network element or dynamically generated. This is not specifically limited in this embodiment of this application.

Further, because one 5GLAN ID corresponds to one PRA ID and one piece of service area information, there is also a correspondence between one PRA ID and one piece of service area information that are corresponding to one 5GLAN ID. In other words, the second configuration information in this embodiment of this application may be shown in Table 6.

**Table 6**

| PRA ID | Service area information |
|---|---|
| PRA ID 1 | Service area information 1 |
| PRA ID 2 | Service area information 2 |
| PRA ID 3 | Service area information 3 |
| ... | ... |

It should be noted that Table 6 merely provides an example of a table storage form of the second configuration information (including the PRA ID and the service area information). Certainly, when the second configuration information is stored, there may be another table storage manner or another non-table storage manner. This is not specifically limited in this embodiment of this application.

Alternatively, optionally, in this embodiment of this application, if the first configuration information includes the PRA ID and the service area information corresponding to the PRA ID, the second configuration information may accordingly include, for example, the PRA ID and the service area information corresponding to the PRA ID. For example, the second configuration information may be shown in Table 2.

Optionally, in this embodiment of this application, the PCF network element may send the second configuration information to the AMF network element in a specific terminal registration process, or may send the second configuration information to the AMF network element after receiving the first configuration information, regardless of registration. This is not specifically limited in this embodiment of this application.

In addition, the local area network communication method provided in this embodiment of this application may further include the following steps.

S603: A terminal sends a non-access stratum (non-access stratum, NAS) message to the AMF network element.

Accordingly, the terminal receives the NAS message from the AMF network element.

In this embodiment of this application, the NAS message includes a session setup request message, a PDU session identifier (session ID), and a 5GLAN ID. Optionally, the NAS message includes a DNN corresponding to a session of the terminal. In this embodiment of this application, it is assumed that the DNN corresponding to the session of the terminal is a DNN 1 for subsequent descriptions. This is uniformly described herein.

Optionally, in this embodiment of this application, there may be one or more 5GLAN IDs in the NAS message in step S603. This is not specifically limited in this embodiment of this application.

S604: The AMF network element sends an N11 message to an SMF network element.

Accordingly, the SMF network element receives the N11 message from the AMF network element.

In this embodiment of this application, the N11 message includes the session setup request message, the PDU session identifier, and the 5GLAN ID. In addition, the N11 message may further include an identifier of the terminal. Optionally, if the NAS message includes the DNN 1, the N11 message may further include the DNN 1. This is not specifically limited in this embodiment of this application.

Optionally, in this embodiment of this application, the identifier of the terminal may be, for example, a subscription permanent identifier (subscription permanent identifier, SUPI), an international mobile subscriber identity (international mobile subscriber identification number, IMSI), a mobile station integrated services digital network number (mobile station integrated services digital network number, MSISDN), a globally unique temporary identity (global unique temporary identifier, GUTI), or a data network-related identity (for example, a network access identifier (network access identifier, NAI) or a 5GLAN-specific subscriber identity). This is not specifically limited in this embodiment of this application.

S605: The SMF network element obtains an address of the terminal or a virtual local area network identifier (virtual local area network identify, VID) that is of the terminal.

Optionally, in this embodiment of this application, for a manner in which the SMF network element obtains the address of the terminal or the VID of the terminal, refer to an existing manner. For example, the address of the terminal or the VID of the terminal is locally allocated; the address of the terminal or the VID of the terminal is obtained from a UDM network element; the address of the terminal or the VID of the terminal is obtained from a dynamic host configuration protocol (dynamic host configuration protocol, DHCP) server; the address of the terminal or the VID of the terminal is obtained from a data network authentication, authorization, and accounting (DN-authentication-authorization-accounting, DN-AAA) server. Details are not described herein.

Optionally, in this embodiment of this application, the address of the terminal or the VID of the terminal obtained by the SMF network element corresponds to the 5GLAN ID in the N11 message in step S604. For example, if there is one 5GLAN ID in the N11 message in step S604, there is one address of the terminal or one VID of the terminal obtained by the SMF network element; or if there are a plurality of 5GLAN IDs in the N11 message in step S604, there may be a plurality of addresses of the terminal or a plurality of VIDs of the terminal obtained by the SMF network element. This is uniformly described herein, and details are not described below.

Optionally, in this embodiment of this application, the address of the terminal may be, for example, an internet protocol version 4 (internet protocol version 4, IPv4) address, an internet protocol version 6 (internet protocol version 6, IPv6) address, a media access control (media access control, MAC) address. This is not specifically limited in this embodiment of this application.

S606: The SMF network element sends a session management (session management, SM) policy request message to the PCF network element.

Accordingly, the PCF network element receives the SM policy request message from the SMF network element.

Optionally, in this embodiment of this application, if the SMF network element obtains the address of the terminal in step S605, the policy request message includes a 5GLAN ID and a corresponding address of the terminal; or if the SMF network element obtains the VID of the terminal in step S605, the policy request message includes a 5GLAN ID and a corresponding VID of the terminal. This is not specifically limited in this embodiment of this application.

The 5GLAN ID in the SM policy request message in step S606 is the 5GLAN ID in the N11 message.

Optionally, in this embodiment of this application, if the N11 message includes the DNN 1, the SM policy request message further includes the DNN 1. This is not specifically limited in this embodiment of this application.

Optionally, in this embodiment of this application, if the policy request message includes the 5GLAN ID and the corresponding address of the terminal, after receiving the SM policy request message from the SMF network element, the PCF network element may store a correspondence between a 5GLAN ID and an address of the terminal, and a result is shown in Table 7.

**Table 7**

| 5GLAN ID | Address of a terminal |
|---|---|
| 5GLAN ID 1 | Address 1 |
| 5GLAN ID 2 | Address 2 |
| 5GLAN ID 3 | Address 3 |
| ... | ... |

Alternatively, optionally, in this embodiment of this application, if the policy request message includes the 5GLAN ID and the corresponding address of the terminal, after receiving the SM policy request message from the SMF network element, the PCF network element may store a correspondence between a PRA ID and an address of the terminal, and a result is shown in Table 8; or may store a correspondence between a 5GLAN ID, a PRA ID, and an address of the terminal, and a result is shown in Table 9. For a manner in which the PCF network element determines the PRA ID based on the 5GLAN ID, refer to step S602. Details are not described herein.

**Table 8**

| PRA ID | Address of a terminal |
|---|---|
| PRA ID 1 | Address 1 |
| PRA ID 2 | Address 2 |
| PRA ID 3 | Address 3 |
| ... | ... |

**Table 9**

| 5GLAN ID | PRA ID | Address of a terminal |
|---|---|---|
| 5GLAN ID 1 | PRA ID 1 | Address 1 |
| 5GLAN ID 2 | PRA ID 2 | Address 2 |
| 5GLAN ID 3 | PRA ID 3 | Address 3 |
| ... | ... | ... |

It should be noted that Table 7 to Table 9 merely provide examples of a table storage form of a correspondence between an address of the terminal and at least one of a 5GLAN ID and a PRA ID. Certainly, when the correspondence between an address of the terminal and at least one of a 5GLAN ID and a PRA ID is stored, there may be another table storage manner or another non-table storage manner. This is not specifically limited in this embodiment of this application.

Alternatively, optionally, in this embodiment of this application, if the policy request message includes the 5GLAN ID and the corresponding VID of the terminal, after receiving the SM policy request message from the SMF network element, the PCF network element may store a correspondence between a 5GLAN ID and a VID of the terminal, and a result is shown in Table 10.

**Table 10**

| 5GLAN ID | VID of a terminal |
|---|---|
| 5GLAN ID 1 | VID 1 |
| 5GLAN ID 2 | VID 2 |
| 5GLAN ID 3 | VID 3 |
| ... | ... |

Alternatively, optionally, in this embodiment of this application, if the policy request message includes the 5GLAN ID and the corresponding VID of the terminal, after receiving the SM policy request message from the SMF network element, the PCF network element may store a correspondence between a PRA ID and a VID of the terminal, and a result is shown in Table 11; or may store a correspondence between a 5GLAN ID, a PRA ID, and a VID of the terminal, and a result is shown in Table 12. For a manner in which the PCF network element determines the PRA ID based on the 5GLAN ID, refer to step S602. Details are not described herein.

**Table 11**

| PRA ID | VID of a terminal |
|---|---|
| PRA ID 1 | VID 1 |
| PRA ID 2 | VID 2 |
| PRA ID 3 | VID 3 |
| ... | ... |

**Table 12**

| 5GLAN ID | PRA ID | VID of a terminal |
|---|---|---|
| 5GLAN ID 1 | PRA ID 1 | VID 1 |
| 5GLAN ID 2 | PRA ID 2 | VID 2 |
| 5GLAN ID 3 | PRA ID 3 | VID 3 |
| ... | ... | ... |

It should be noted that Table 10 to Table 12 merely provide examples of a table storage form of a correspondence between a VID of the terminal and at least one of a 5GLAN ID and a PRA ID. Certainly, when the correspondence between a VID of the terminal and at least one of a 5GLAN ID and a PRA ID is stored, there may be another table storage manner or another non-table storage manner. This is not specifically limited in this embodiment of this application.

S607: The PCF network element sends a first subscription (subscription) request message to the SMF network element.

Accordingly, the SMF network element receives the first subscription request message from the PCF network element.

The first subscription request message includes at least one of a 5GLAN ID and a PRA ID corresponding to the 5GLAN ID. The 5GLAN ID or the PRA ID herein is a 5GLAN ID corresponding to a 5GLAN with a service area restriction, for example, a 5GLAN ID that is selected from the 5GLAN ID in the SM policy request message in step S606 and that has an intersection with the 5GLAN ID in step S601, or a 5GLAN ID that is selected from the 5GLAN ID in the SM policy request message in step S606 and that has an intersection with the 5GLAN ID corresponding to the PRA ID in step S601.

Optionally, in this embodiment of this application, if the SM policy request message in step S606 further includes the DNN 1, the PCF network element may determine the 5GLAN ID or the PRA ID in the first subscription request message with reference to the DNN 1. This is not specifically limited in this embodiment of this application.

Optionally, in this embodiment of this application, if step S601 is performed and step S602 is not performed, the first subscription request message further includes the service area information corresponding to the 5GLAN ID or the PRA ID. This is not specifically limited in this embodiment of this application.

Alternatively, optionally, in this embodiment of this application, if step S602 is performed, the first subscription request message needs to include the PRA ID if the second configuration information in step S602 is the PRA ID and the corresponding service area information.

Alternatively, optionally, in this embodiment of this application, if step S602 is performed, the first subscription request message needs to include the 5GLAN ID if the second configuration information in step S602 is the 5GLAN ID and the corresponding service area information. This is uniformly described herein, and details are not described below.

Optionally, in this embodiment of this application, if subscription needs to be performed for a plurality of 5GLAN IDs or a plurality of PRA IDs, a plurality of subscriptions may be performed by using one subscription request message; or subscription may be performed for each 5GLAN ID or each PRA ID by using one subscription request message. This is not specifically limited in this embodiment of this application.

Optionally, the first subscription request message in this embodiment of this application may be alternatively replaced with a first mobility event subscription (mobility event subscription) request message. This is not specifically limited in this embodiment of this application.

S608: The SMF network element sends a second subscription (subscription) request message to the AMF network element.

Accordingly, the AMF network element receives the second subscription request message from the SMF network element.

The second subscription request message includes information in the first subscription request message. For example, if the first subscription request message includes the PRA ID, the second subscription request message includes the PRA ID; if the first subscription request message includes the 5GLAN ID, the second subscription request message includes the 5GLAN ID; or if the first subscription request message includes the 5GLAN ID and the PRA ID, the second subscription request message includes the 5GLAN ID and the PRA ID. This is not specifically limited in this embodiment of this application. In addition, if the first subscription request message further includes the service area information corresponding to the 5GLAN ID or the PRA ID, the second subscription request message accordingly further includes the service area information corresponding to the 5GLAN ID or the PRA ID. This is not specifically limited in this embodiment of this application.

Optionally, in this embodiment of this application, if subscription needs to be performed for a plurality of 5GLAN IDs or a plurality of PRA IDs, a plurality of subscriptions may be performed by using one subscription request message; or subscription may be performed for each 5GLAN ID or each PRA ID by using one subscription request message. This is not specifically limited in this embodiment of this application.

Optionally, the second subscription request message in this embodiment of this application may be alternatively replaced with a second mobility event subscription (mobility event subscription) request message. This is not specifically limited in this embodiment of this application.

S609: The AMF network element detects a mobility event of the terminal within a service area of a subscribed 5GLAN.

Optionally, in this embodiment of this application, if the second subscription request message includes the service area information corresponding to the 5GLAN ID or the PRA ID, the AMF network element may detect the mobility event of the terminal within the service area of the subscribed 5GLAN based on the service area information corresponding to the 5GLAN ID or the PRA ID.

Alternatively, optionally, in this embodiment of this application, if the second subscription request message does not include the service area information corresponding to the 5GLAN ID or the PRA ID, but step S602 is performed, and the second configuration information in step S602 is the PRA ID and the corresponding service area information, the AMF network element may determine the corresponding service area information with reference to the second configuration information based on the PRA ID included in the second subscription request message, and further detect the mobility event of the terminal within the service area of the subscribed 5GLAN based on the service area information. This is not specifically limited in this embodiment of this application.

Alternatively, optionally, in this embodiment of this application, if the second subscription request message does not include the service area information corresponding to the 5GLAN ID or the PRA ID, but step S602 is performed, and the second configuration information in step S602 is the 5GLAN ID and the corresponding service area information, the AMF network element may determine the corresponding service area information with reference to the second configuration information based on the 5GLAN ID included in the second subscription request message, and further detect the mobility event of the terminal within the service area of the subscribed 5GLAN based on the service area information. This is not specifically limited in this embodiment of this application.

Optionally, in this embodiment of this application, if the AMF network element accepts a second subscription request or the AMF network element detects the mobility event of the terminal within the service area of the subscribed 5GLAN, for example, the terminal moves into or moves out of a service area of a subscribed 5GLAN 1, the local area network communication method provided in this embodiment of this application may further include the following steps.

S610: The AMF network element sends a first event report to the SMF network element.

Accordingly, the SMF network element receives the first event report from the AMF network element.

The first event report includes a first event and indication information of the 5GLAN 1. The first event includes that the terminal moves into or moves out of the service area of the 5GLAN 1. The indication information of the 5GLAN 1 may be, for example, a 5GLAN ID 1 or a PRA ID 1.

Optionally, in this embodiment of this application, the indication information of the 5GLAN 1 may include, for example, a 5GLAN ID 1 or a PRA ID 1. This is not specifically limited in this embodiment of this application.

It should be noted that if the second subscription request message includes the 5GLAN ID, the indication information of the 5GLAN 1 may accordingly include, for example, the 5GLAN ID 1; or if the second subscription request message includes the PRA ID, the indication information of the 5GLAN 1 may accordingly include, for example, the PRA ID 1. This is uniformly described herein, and details are not described below.

S611: The SMF network element sends the first event report to the PCF network element.

Accordingly, the PCF network element receives the first event report from the SMF network element.

S612: The PCF network element updates, based on the first event and the indication information of the 5GLAN 1, a first PCC rule corresponding to the terminal.

Optionally, in this embodiment of this application, if the indication information of the 5GLAN 1 is the 5GLAN ID 1, that the PCF network element updates, based on the first event and the indication information of the 5GLAN 1, the first PCC rule corresponding to the terminal may be, for example, that the PCF network element determines, based on the 5GLAN ID 1 with reference to a correspondence (for example, Table 7 or Table 9) between the 5GLAN ID 1 and a corresponding address of the terminal, an address that is of the terminal and that is corresponding to the 5GLAN ID 1, and then updates, based on the first event and the determined address of the terminal, the first PCC rule corresponding to the terminal.

Alternatively, optionally, in this embodiment of this application, if the indication information of the 5GLAN 1 is the 5GLAN ID 1, that the PCF network element updates, based on the first event and the indication information of the 5GLAN 1, the first PCC rule corresponding to the terminal may be, for example, that the PCF network element determines, based on the 5GLAN ID 1 with reference to a correspondence (for example, Table 10 or Table 12) between the 5GLAN ID 1 and a corresponding VID of the terminal, a VID that is of the terminal and that is corresponding to the 5GLAN ID 1, and then updates, based on the first event and the determined VID of the terminal, the first PCC rule corresponding to the terminal.

Alternatively, optionally, in this embodiment of this application, if the indication information of the 5GLAN 1 is the PRA ID 1, that the PCF network element updates, based on the first event and the indication information of the 5GLAN 1, the first PCC rule corresponding to the terminal may be, for example, that the PCF network element determines, based on the PRA ID 1 with reference to a correspondence (for example, Table 8 or Table 9) between the PRA ID 1 and a corresponding address of the terminal, an address that is of the terminal and that is corresponding to the PRA ID 1, and then updates, based on the first event and the determined address of the terminal, the first PCC rule corresponding to the terminal.

Alternatively, optionally, in this embodiment of this application, if the indication information of the 5GLAN 1 is the PRA ID 1, that the PCF network element updates, based on the first event and the indication information of the 5GLAN 1, the first PCC rule corresponding to the terminal may be, for example, that the PCF network element determines, based on the PRA ID 1 with reference to a correspondence (for example, Table 11 or Table 12) between the PRA ID 1 and a corresponding VID of the terminal, a VID that is of the terminal and that is corresponding to the PRA ID 1, and then updates, based on the first event and the determined VID of the terminal, the first PCC rule corresponding to the terminal.

Optionally, in this embodiment of this application, that the PCF network element updates, based on the first event and the determined address of the terminal, the first PCC rule corresponding to the terminal may include, for example, the following: If the first event is that the terminal moves into the service area of the 5GLAN 1, a filter and a quality of service (quality of service, QoS) parameter that are associated with the address of the terminal are determined, and the filter and the QoS parameter are added to the first PCC rule, to obtain an updated first PCC rule; or if the first event is that the terminal moves out of the service area of the 5GLAN 1, a filter and a QoS parameter that are associated with the address of the terminal are determined, and the filter and the QoS parameter are deleted from the first PCC rule, to obtain the updated first PCC rule.

Alternatively, optionally, in this embodiment of this application, that the PCF network element updates, based on the first event and the determined VID of the terminal, the first PCC rule corresponding to the terminal may include, for example, the following: If the first event is that the terminal moves into the service area of the 5GLAN 1, a filter and a QoS parameter that are associated with the VID of the terminal are determined, and the filter and the QoS parameter are added to the first PCC rule, to obtain an updated first PCC rule; or if the first event is that the terminal moves out of the service area of the 5GLAN 1, a filter and a QoS parameter that are associated with the VID of the terminal are determined, and the filter and the QoS parameter are deleted from the first PCC rule, to obtain the updated first PCC rule.

S613: The PCF network element sends the updated first PCC rule to the SMF network element.

Accordingly, the SMF network element receives the updated first PCC rule from the PCF network element.

S614: The SMF network element modifies a session of the terminal based on the updated first PCC rule.

Optionally, in a possible implementation, in this embodiment of this application, that the SMF network element modifies the session of the terminal based on the updated first PCC rule may include: If the updated first PCC rule indicates that the terminal is allowed to route data in the 5GLAN 1, the SMF network element indicates the UPF network element to set a first routing rule, where the first routing rule includes the address of the terminal or the VID of the terminal, and is used to associate the session with the 5GLAN 1. For example, if the updated first PCC rule includes the filter and the QoS parameter that are associated with the address of the terminal, the updated first PCC rule may indicate that the terminal is allowed to route data in the 5GLAN 1, and then the SMF network element may indicate the UPF network element to set the first routing rule, where the first routing rule includes the address of the terminal. Alternatively, for example, if the updated first PCC rule includes the filter and the QoS parameter that are associated with the VID of the terminal, the updated first PCC rule may indicate that the terminal is allowed to route data in the 5GLAN 1, and then the SMF network element may indicate the UPF network element to set the first routing rule, where the first routing rule includes the VID of the terminal.

Optionally, in the foregoing case, if the session of the terminal has been deactivated, the SMF network element further needs to activate a user plane connection of the session of the terminal. For example, when receiving a downlink data notification or downlink data, the SMF network element sends an N11 message (Namf_Communication_N1N2MessageTransfer) to the AMF network element, and triggers a network-triggered service request process for the session of the terminal, to activate the user plane connection of the session of the terminal. Alternatively, after receiving an N11 message (Nsmf_PDUSession_ UpdateSMContext Request) sent by the AMF network element, the SMF network element activates the user plane connection of the session of the terminal.

Alternatively, optionally, in another possible implementation, in this embodiment of this application, that the SMF network element modifies the session of the terminal based on the updated first PCC rule may include: If the updated first PCC rule indicates that the terminal is not allowed to route data in the 5GLAN 1, the SMF network element indicates the UPF network element to delete a first routing rule, where the first routing rule includes the address of the terminal or the VID of the terminal, and is used to associate the session with the 5GLAN 1. For example, if the updated first PCC rule does not include a filter and a QoS parameter that are associated with the address of the terminal, the updated first PCC rule may indicate that the terminal is not allowed to route data in the 5GLAN 1, and then the SMF network element indicates the UPF network element to delete the first routing rule, where the first routing rule includes the address of the terminal or the VID of the terminal.

Optionally, in the foregoing case, if the session of the terminal is allowed to access only the 5GLAN 1, the SMF network element further needs to deactivate the user plane connection of the session of the terminal, and the SMF network element needs to ensure that a data notification is disabled. If the SMF network element is not notified, after a period of time, that the terminal moves into the service area of the 5GLAN 1, the SMF network element releases the session of the terminal. Alternatively, the SMF network element directly releases the session of the terminal.

Optionally, in this embodiment of this application, that the SMF network element indicates the UPF network element to set the first routing rule may include, for example, that the SMF network element determines the first routing rule based on the address of the terminal or the VID of the terminal, adds the first routing rule to an N4 session modification/setup message, and sends the N4 session modification/setup message to the UPF network element, and the UPF network element sets the first routing rule.

Optionally, in this embodiment of this application, that the SMF network element indicates the UPF network element to delete the first routing rule may include, for example, that the SMF network element determines the first routing rule based on the address of the terminal or the VID of the terminal, deletes the first routing rule from a routing rule of the session of the terminal, adds, to an N4 session modification/release message, an updated session rule of the terminal that does not include the first routing rule, and sends the N4 session modification/release message to the UPF network element, and the UPF network element deletes a local first routing rule based on the session rule of the terminal that does not include the first routing rule. Alternatively, the SMF network element adds the 5GLAN ID to an N4 session modification/release message and sends the N4 session modification/release message to the UPF network element, and the UPF network element deletes the first routing rule based on the 5GLAN ID.

Optionally, in this embodiment of this application, after receiving the updated first PCC rule, the SMF network element may determine the address of the terminal or the VID of the terminal in the following manner: The SMF network element compares a locally stored session PCC rule corresponding to the terminal with the updated first PCC rule, to determine the address of the terminal or the VID of the terminal. For example, compared with the locally stored session PCC rule corresponding to the terminal, the updated first PCC rule has a PCC rule that includes the address of the terminal or the VID of the terminal; or compared with the locally stored session PCC rule corresponding to the terminal, the updated first PCC rule does not have a PCC rule that includes the address of the terminal or the VID of the terminal, it may be determined that the address of the terminal or the VID of the terminal that is related to the added PCC rule or the reduced PCC rule is the address of the terminal or the VID of the terminal.

Based on the foregoing local area network communication method, when one session of the terminal is connected to a plurality of 5GLAN services, communication of the terminal in one or more 5GLANs can be restricted based on a location of the terminal. For analysis of a related technical effect, refer to the communications system part shown in FIG. 1. Details are not described herein.

Actions of the PCF network element or the SMF network element in steps S601 to S614 may be performed, by invoking the application program code stored in the memory 503, by the processor 501 in the communications device 500 shown in FIG. 5. This is not limited in this embodiment.

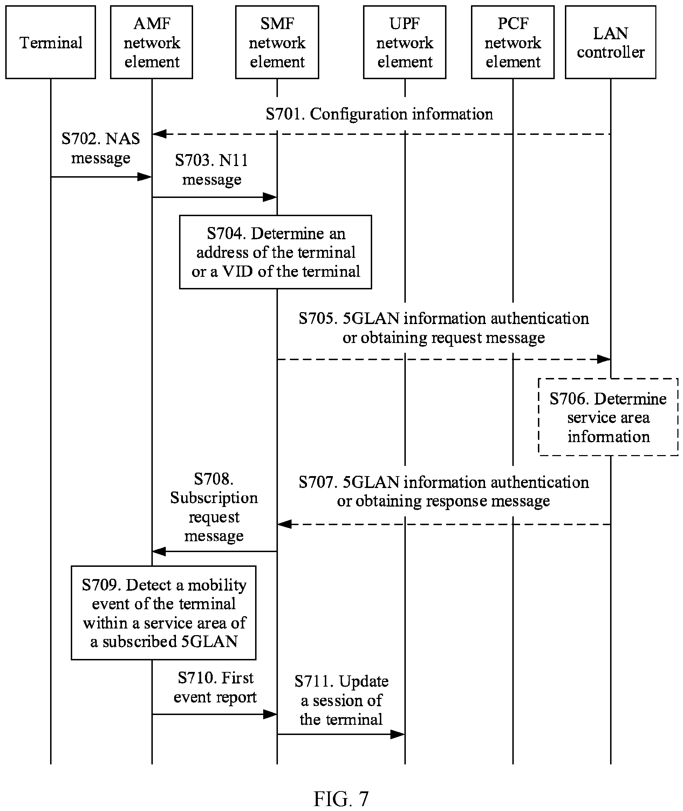

Optionally, for example, the communications system shown in FIG. 2 is applied to the 5G network shown in FIG. 3. FIG. 7 shows a local area network communication method according to an embodiment of this application. The local area network communication method optionally includes the following step S701.

S701: A LAN controller sends configuration information to an AMF network element.

Accordingly, the AMF network element receives the configuration information from a PCF network element.

The configuration information in this embodiment of this application may be the same as the second configuration information in the embodiment shown in FIG. 6. For related descriptions, refer to the embodiment shown in FIG. 6. Details are not described herein.

Optionally, in this embodiment of this application, the LAN controller may directly send the configuration information to the AMF network element, or may send the configuration information to the AMF network element through another network element such as a PCF network element. This is not specifically limited in this embodiment of this application.

In addition, the local area network communication method provided in this embodiment of this application may further include the following steps S702 to S704.

S702 to S704 are the same as steps S603 to S605 in the embodiment shown in FIG. 6. For related descriptions, refer to the embodiment shown in FIG. 6. Details are not described herein.

In addition, in this embodiment of this application, after determining an address of the terminal, an SMF network element may further store a correspondence (for example, as shown in Table 7) between a 5GLAN ID and an address of the terminal. In the latter case, after the SMF network element determines the address of the terminal, if the SMF network element may subsequently obtain a PRA ID corresponding to the 5GLAN ID, the SMF network element may further store a correspondence (for example, as shown in Table 8) between a PRA ID and an address of the terminal, or store a correspondence (for example, as shown in Table 9) between a 5GLAN ID, a PRA ID, and an address of the terminal. Alternatively, after determining a VID of the terminal, the SMF network element may further store a correspondence (for example, as shown in Table 10) between a 5GLAN ID and a VID of the terminal; or after the SMF network element determines a VID of the terminal, if the SMF network element may subsequently obtain a PRA ID corresponding to the 5GLAN ID, the SMF network element may further store a correspondence (for example, as shown in Table 10) between a PRA ID and a VID of the terminal, or store a correspondence (for example, as shown in Table 11) between a 5GLAN ID, a PRA ID, and a VID of the terminal. This is not specifically limited in this embodiment of this application.

Optionally, in this embodiment of this application, if step S701 is not performed, the local area network communication method provided in this embodiment of this application may further include the following steps S705 to S707.

S705: The SMF network element sends a 5GLAN information authentication or obtaining request message to the LAN controller.

Accordingly, the LAN controller receives the 5GLAN information authentication or obtaining request message from the SMF network element.

In this embodiment of this application, the 5GLAN information authentication or obtaining request message may include a 5GLAN ID, and the 5GLAN ID is the 5GLAN ID in the N11 message.

Optionally, the 5GLAN information authentication or obtaining request message may further include a DNN 1. This is not specifically limited in this embodiment of this application.

S706: The LAN controller determines service area information corresponding to the 5GLAN ID.

In this embodiment of this application, if the 5GLAN information authentication or obtaining request message includes a plurality of 5GLAN IDs, the LAN controller may determine a plurality of pieces of service area information. One piece of service area information corresponds to one 5GLAN ID.

Optionally, if the 5GLAN ID included in the 5GLAN information authentication or obtaining request message does not have corresponding service area information, the LAN controller does not need to determine the service area information corresponding to the 5GLAN ID. Alternatively, if the 5GLAN information authentication or obtaining request message includes a plurality of 5GLAN IDs, some 5GLAN IDs do not have corresponding service area information, and some 5GLAN IDs have corresponding service area information, and in this case, for the 5GLAN ID having corresponding service area information, the LAN controller determines the service area information corresponding to the 5GLAN ID. This is uniformly described herein, and details are not described below.

Optionally, in this embodiment of this application, a correspondence between a 5GLAN ID and service area information may be configured for the LAN controller. For example, the correspondence may be shown in Table 1. Further, after receiving the 5GLAN ID, the LAN controller may determine the corresponding service area information based on the correspondence.

Alternatively, optionally, in this embodiment of this application, a correspondence between a DNN, a 5GLAN ID, and service area information may be configured for the LAN controller. For example, the correspondence may be shown in Table 3 or Table 4. Further, after receiving the DNN 1 and the 5GLAN ID, the LAN controller may determine the corresponding service area information based on the correspondence.

S707: The LAN controller sends a 5GLAN information authentication or obtaining response message to the SMF network element.

Accordingly, the SMF network element receives the 5GLAN information authentication or obtaining response message from the LAN controller.

The 5GLAN information authentication or obtaining response message includes corresponding service area information and at least one of a 5GLAN ID and a PRA ID. For example, if the 5GLAN information authentication or obtaining response message includes the 5GLAN ID and the corresponding service area information, the 5GLAN ID and the corresponding service area information may be shown in Table 1. Alternatively, for example, if the 5GLAN information authentication or obtaining response message includes the PRA ID and the corresponding service area information, the PRA ID and the corresponding service area information may be shown in Table 2. Alternatively, for example, if the 5GLAN information authentication or obtaining response message includes the 5GLAN ID, the PRA ID, and the corresponding service area information, the 5GLAN ID, the PRA ID, and the corresponding service area information may be shown in Table 13.

**Table 13**

| 5GLAN ID | PRA ID | Service area information |
|---|---|---|
| 5GLAN ID 1 | PRA ID 1 | Service area information 1 |
| 5GLAN ID 2 | PRA ID 2 | Service area information 2 |
| 5GLAN ID 3 | PRA ID 3 | Service area information 3 |
| ... | ... | ... |

It should be noted that Table 13 merely provides an example of a table association manner of the 5GLAN ID, the PRA ID, and the corresponding service area information. Certainly, the 5GLAN ID, the PRA ID, and the corresponding service area information may be alternatively associated in another manner. This is not specifically limited in this embodiment of this application.

Optionally, in this embodiment of this application, if step S701 is performed, the SMF network element may alternatively send the 5GLAN information authentication or obtaining request message to the LAN controller. Accordingly, the LAN controller receives the 5GLAN information authentication or obtaining request message from the SMF network element. The 5GLAN information authentication or obtaining request message may include a 5GLAN ID, and the 5GLAN ID is the 5GLAN ID in the N11 message. Further, the LAN controller may send the 5GLAN information authentication or obtaining response message to the SMF network element. Accordingly, the SMF network element receives the 5GLAN information authentication or obtaining response message from the LAN controller. The 5GLAN information authentication or obtaining response message includes a PRA ID corresponding to the 5GLAN ID. This is not specifically limited in this embodiment of this application.

Optionally, in this embodiment of this application, if the N11 message in step S703 includes a plurality of 5GLAN IDs, the plurality of 5GLAN IDs may be alternatively carried in S705, and service area information corresponding to each 5GLAN ID is obtained by performing steps S705 to S707 once. In this case, the 5GLAN information authentication or obtaining response message may carry the 5GLAN ID and the service area information for each 5GLAN ID; or the 5GLAN information authentication or obtaining response message may carry the PRA ID and the service area information for each 5GLAN ID; or the 5GLAN information authentication or obtaining response message may carry the 5GLAN ID, the PRA ID, and the service area information for each 5GLAN ID. This is not specifically limited in this embodiment of this application.

Optionally, in this embodiment of this application, if the N11 message in step S703 includes a plurality of 5GLAN IDs, service area information corresponding to each 5GLAN ID may be obtained by performing steps S705 to S707 for a plurality of times. In this case, the 5GLAN information authentication or obtaining response message may not include the 5GLAN ID or the PRA ID, but includes the service area information. This is not specifically limited in this embodiment of this application.

Alternatively, optionally, in this embodiment of this application, if step S701 is performed, in the local area network communication method provided in this embodiment of this application, after step S703 is performed, step S705 may also be performed, so that the LAN controller may determine whether a 5GLAN corresponding to the 5GLAN ID in the 5GLAN information authentication or obtaining request message has a service area restriction, and then the LAN controller sends the 5GLAN information authentication or obtaining response message to the SMF network element. Accordingly, the SMF network element receives the 5GLAN information authentication or obtaining response message from the LAN controller. The 5GLAN information authentication or obtaining response message includes corresponding service area restriction indication information and at least one of the 5GLAN ID and the PRA ID. In this way, the SMF network element may subsequently send a subscription request message to the AMF network element based on the service area restriction indication information. This is not specifically limited in this embodiment of this application.

S708: The SMF network element sends a subscription (subscription) request message to the AMF network element.

Accordingly, the AMF network element receives the subscription request message from the SMF network element.

The subscription request message includes at least one of the 5GLAN ID and the PRA ID corresponding to the 5GLAN ID. The 5GLAN ID or the PRA ID herein is a 5GLAN ID corresponding to a 5GLAN with a service area restriction. For example, the 5GLAN ID herein may be the 5GLAN ID in the 5GLAN information authentication or obtaining response message in step S707; or the 5GLAN ID herein may be the 5GLAN ID corresponding to the PRA ID in the 5GLAN information authentication or obtaining response message in step S707; or the 5GLAN ID herein may be a 5GLAN ID determined based on the service area restriction indication information in the 5GLAN information authentication or obtaining response message in step S707.

Optionally, the subscription request message may further include the service area information corresponding to the 5GLAN ID or the PRA ID. For example, if the foregoing steps S705 to S707 are performed, and the 5GLAN information authentication or obtaining response message includes the PRA ID and the corresponding service area information, or the 5GLAN information authentication or obtaining response message includes the 5GLAN ID, the PRA ID, and the corresponding service area information, the subscription request message may include the PRA ID and the corresponding service area information. Alternatively, for example, if the foregoing steps S705 to S707 are performed, and the 5GLAN information authentication or obtaining response message includes the service area information corresponding to the 5GLAN ID, the subscription request message includes the 5GLAN ID and the corresponding service area information. Alternatively, for example, if step S701 is performed and steps S705 to S707 are not performed, the subscription request message may include the 5GLAN ID. This is not specifically limited in this embodiment of this application.

Optionally, in this embodiment of this application, if subscription needs to be performed for a plurality of 5GLAN IDs or a plurality of PRA IDs, a plurality of subscriptions may be performed by using one subscription request message; or subscription may be performed for each 5GLAN ID or each PRA ID by using one subscription request message. This is not specifically limited in this embodiment of this application.

Optionally, the subscription request message in this embodiment of this application may be alternatively replaced with a mobility event subscription (mobility event subscription) request message. This is not specifically limited in this embodiment of this application.

S709 and S710 are the same as steps S609 and S610 in the embodiment shown in FIG. 6. For related descriptions, refer to the embodiment shown in FIG. 6. Details are not described herein.

S711: The SMF network element modifies a session of the terminal based on a first event and indication information of a 5GLAN 1.

Optionally, in this embodiment of this application, in a possible implementation, that the SMF network element modifies a session of the terminal based on a first event and indication information of a 5GLAN 1 may include: If the SMF network element determines, based on the first event and the indication information of the 5GLAN 1, that the terminal is allowed to route data in the 5GLAN 1, the SMF network element indicates a UPF network element to set a first routing rule, where the first routing rule includes the address of the terminal or the VID of the terminal, and is used to associate the session with the 5GLAN 1. The address of the terminal may be determined based on the indication information of the 5GLAN 1 in the first event report and with reference to a correspondence (as shown in Table 7, Table 8, or Table 9) between the indication information of the 5GLAN 1 and the address that is of the terminal. Alternatively, the VID of the terminal may be determined based on the indication information of the 5GLAN 1 in the first event report and with reference to a correspondence (as shown in Table 10, Table 11, or Table 12) between the indication information of the 5GLAN 1 and the VID of the terminal.

Optionally, in the foregoing case, if the session of the terminal has been deactivated, the SMF network element further needs to activate a user plane connection of the session of the terminal. For related descriptions, refer to step S614 in the embodiment shown in FIG. 6. Details are not described herein.

Alternatively, optionally, in this embodiment of this application, in another possible implementation, that the SMF network element modifies a session of the terminal based on a first event and indication information of a 5GLAN 1 may include: If the SMF network element determines, based on the first event and the indication information of the 5GLAN 1, that the terminal is not allowed to route data in the 5GLAN 1, the SMF network element indicates a UPF network element to delete a first routing rule, where the first routing rule includes the address of the terminal or the VID of the terminal, and is used to associate the session with the 5GLAN 1.

Optionally, in the foregoing case, if the session of the terminal is allowed to access only the 5GLAN 1, the SMF network element further needs to deactivate or directly release the session of the terminal. For related descriptions, refer to step S614 in the embodiment shown in FIG. 6. Details are not described herein.

Optionally, in this embodiment of this application, if the first event is that the terminal moves into a service area of the 5GLAN 1, the SMF network element may determine, based on the first event and the indication information of the 5GLAN 1, that data is allowed to be routed in the 5GLAN 1. Alternatively, in this embodiment of this application, if the first event is that the terminal moves out of a service area of the 5GLAN 1, the SMF network element may determine, based on the first event and the indication information of the 5GLAN 1, that data is not allowed to be routed in the 5GLAN 1.

Optionally, in this embodiment of this application, for a related implementation in which the SMF network element indicates the UPF network element to set the first routing rule or the SMF network element indicates the UPF network element to delete the first routing rule, refer to step S614 in the embodiment shown in FIG. 6. Details are not described herein.

Optionally, in this embodiment of this application, the SMF network element may determine the address of the terminal based on the indication information of the 5GLAN 1 and a stored correspondence between the indication information of the 5GLAN 1 and the address that is of the terminal; or the SMF network element may determine the VID of the terminal based on the indication information of the 5GLAN 1 and a stored correspondence between the indication information of the 5GLAN 1 and the VID of the terminal.

Based on the foregoing local area network communication method, when one session of the terminal is connected to a plurality of 5GLAN services, communication of the terminal in one or more 5GLANs can be restricted based on a location of the terminal. For analysis of a related technical effect, refer to the communications system part shown in FIG. 1. Details are not described herein.

Actions of the AMF network element or the SMF network element in steps S701 to S711 may be performed, by invoking the application program code stored in the memory 503, by the processor 501 in the communications device 500 shown in FIG. 5. This is not limited in this embodiment.

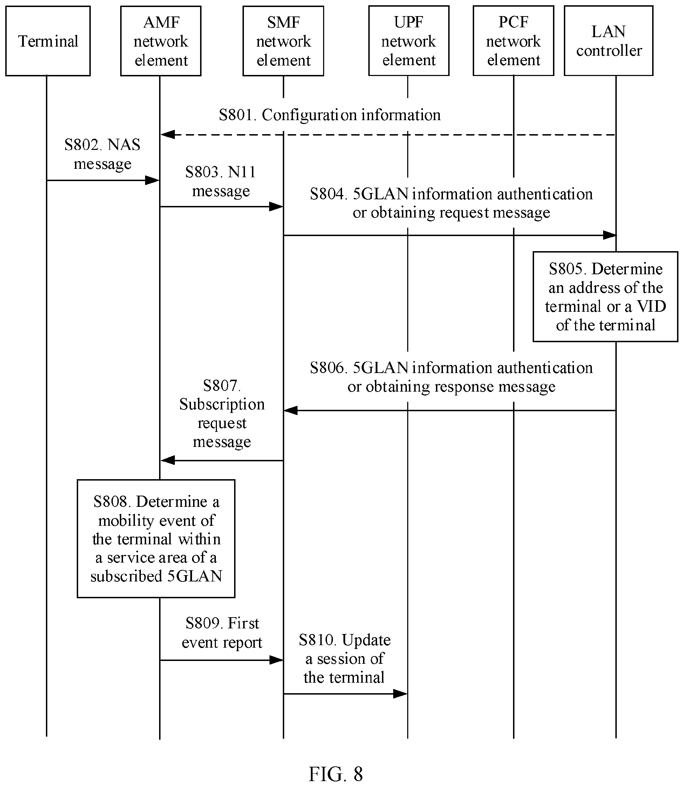

Optionally, for example, the communications system shown in FIG. 2 is applied to the 5G network shown in FIG. 3. FIG. 8 shows a local area network communication method according to an embodiment of this application. The local area network communication method optionally includes the following step S801.

S801 is the same as step S701 in the embodiment shown in FIG. 7. For related descriptions, refer to the embodiment shown in FIG. 7. Details are not described herein.

S802: A terminal sends a NAS message to the AMF network element.

Accordingly, the terminal receives the NAS message from the AMF network element.

In this embodiment of this application, the NAS message includes a session setup request message, a PDU session identifier (session ID), and a DNN corresponding to a session of the terminal. In this embodiment of this application, it is assumed that the DNN corresponding to the session of the terminal is a DNN 1 for subsequent descriptions. This is uniformly described herein.

S803: The AMF network element sends an N11 message to an SMF network element.

Accordingly, the SMF network element receives the N11 message from the AMF network element.

In this embodiment of this application, the N11 message includes the session setup request message, the PDU session identifier, and the DNN. In addition, the N11 message may further include an identifier of the terminal. For related descriptions of the identifier of the terminal, refer to step S604 in the embodiment shown in FIG. 6. Details are not described herein.

S804: The SMF network element sends a 5GLAN information authentication or obtaining request message to the LAN controller.

Accordingly, the LAN controller receives the 5GLAN information authentication or obtaining request message from the SMF network element.

In this embodiment of this application, the 5GLAN information authentication or obtaining request message may include the DNN 1 and the identifier of the terminal.

S805: The LAN controller determines a 5GLAN ID associated with the DNN 1, and allocates an address or a VID that is of the terminal and that is corresponding to the 5GLAN ID; or the LAN controller determines a PRA ID associated with the DNN 1, and allocates an address or a VID that is of the terminal and that is corresponding to the PRA ID.

Optionally, in this embodiment of this application, if step S801 is not performed, the LAN controller determines the 5GLAN ID associated with the DNN 1, and a 5GLAN corresponding to the 5GLAN ID has a service area restriction, the LAN controller further needs to determine service area information corresponding to the 5GLAN ID; or if the LAN controller determines the PRA ID associated with the DNN 1, and a 5GLAN corresponding to the PRA ID has a service area restriction, the LAN controller further needs to determine service area information corresponding to the PRA ID.

Optionally, in this embodiment of this application, there may be one or more 5GLAN IDs associated with the DNN 1, or there may be one or more PRA IDs associated with the DNN 1. This is not specifically limited in this embodiment of this application.

If there are a plurality of 5GLAN IDs or PRA IDs, there are one or more pieces of corresponding service area information. For example, a correspondence between the DNN, the 5GLAN ID, and the service area information maybe shown in Table 3 or Table 4.

Alternatively, if there are a plurality of 5GLAN IDs, there may be one or more corresponding addresses of the terminal. For example, a correspondence between the 5GLAN ID and the address that is of the terminal may be shown in Table 7 or Table 9.

Alternatively, if there are a plurality of PRA IDs, there may be one or more corresponding addresses of the terminal. For example, a correspondence between the PRA ID and the address that is of the terminal may be shown in Table 8 or Table 9.

Alternatively, if there are a plurality of 5GLAN IDs, there may be one or more corresponding VIDs of the terminal. For example, a correspondence between the 5GLAN ID and the VID of the terminal may be shown in Table 10 or Table 12.

Alternatively, if there are a plurality of PRA IDs, there may be one or more corresponding VIDs of the terminal. For example, a correspondence between the PRA ID and the VID of the terminal may be shown in Table 11 or Table 12.

S806: The LAN controller sends a 5GLAN information authentication or obtaining response message to the SMF network element.

Accordingly, the SMF network element receives the 5GLAN information authentication or obtaining response message from the LAN controller.

Optionally, in step S805, if the LAN controller determines the 5GLAN ID associated with the DNN 1, and allocates the address that is of the terminal and that is corresponding to the 5GLAN ID, the 5GLAN information authentication or obtaining response message accordingly includes the 5GLAN ID and the corresponding address of the terminal.

Alternatively, optionally, in step S805, if the LAN controller determines the 5GLAN ID associated with the DNN 1, and allocates the VID that is of the terminal and that is corresponding to the 5GLAN ID, the 5GLAN information authentication or obtaining response message accordingly includes the 5GLAN ID and the corresponding VID of the terminal.

Alternatively, optionally, in step S805, if the LAN controller determines the PRA ID associated with the DNN 1, and allocates the address that is of the terminal and that is corresponding to the PRA ID, the 5GLAN information authentication or obtaining response message accordingly includes the PRA ID and the corresponding address of the terminal.

Alternatively, optionally, in step S805, if the LAN controller determines the PRA ID associated with the DNN 1, and allocates the VID that is of the terminal and that is corresponding to the PRA ID, the 5GLAN information authentication or obtaining response message accordingly includes the PRA ID and the corresponding VID of the terminal.

Optionally, in this embodiment of this application, if the LAN controller further determines the service area information corresponding to the 5GLAN ID or the PRA ID in step S805, the 5GLAN information authentication or obtaining response message further includes the service area information corresponding to the 5GLAN ID or the PRA ID.

Based on the foregoing steps S804 to S806, the SMF network element may obtain the address that is of the terminal and that is corresponding to the 5GLAN ID or the PRA ID, or the SMF network element may obtain the VID that is of the terminal and that is corresponding to the 5GLAN ID or the PRA ID. Optionally, the SMF network element may obtain the service area information corresponding to the 5GLAN ID or the PRA ID.

Optionally, in this embodiment of this application, if step S801 is performed, in the local area network communication method provided in this embodiment of this application, after step S803 is performed, step S804 may also be performed, so that the LAN controller may determine whether the 5GLAN corresponding to the 5GLAN ID that is associated with the DNN 1 and that is in the 5GLAN information authentication or obtaining request message has a service area restriction, and may further perform a step similar to step S806, for example, a difference lies in that the corresponding service area information in step S806 is replaced with corresponding service area restriction indication information. For related descriptions, refer to step S806. Details are not described herein.

Optionally, in this embodiment of this application, the SMF network element may determine, in the manner in the embodiment shown in FIG. 5 or FIG. 6, the address that is of the terminal and that is corresponding to the 5GLAN ID or the PRA ID, or the VID that is of the terminal and that is corresponding to the 5GLAN ID or the PRA ID. Alternatively, in the embodiment shown in FIG. 5 or FIG. 6, the address that is of the terminal and that is corresponding to the 5GLAN ID or the PRA ID may be alternatively obtained in the foregoing manner of obtaining the address that is of the terminal and that is corresponding to the 5GLAN ID or the PRA ID in the foregoing steps S804 to S806 in this embodiment of this application. Alternatively, in the embodiment shown in FIG. 5 or FIG. 6, the VID that is of the terminal and that is corresponding to the 5GLAN ID or the PRA ID may be obtained in the foregoing manner of obtaining the VID that is of the terminal and that is corresponding to the 5GLAN ID or the PRA ID in the foregoing steps S804 to S806 in this embodiment of this application. This is not specifically limited in this embodiment of this application.

S807 is similar to step S708 in the embodiment shown in FIG. 7. For example, a difference lies in that, in step S807, the 5GLAN ID or the PRA ID included in the subscription request message is a 5GLAN ID corresponding to a 5GLAN with a service area restriction. For example, when the 5GLAN information authentication or obtaining response message in step S806 includes the service area information, the 5GLAN ID included in the subscription request message in step S807 may be a 5GLAN ID corresponding to the service area information. Alternatively, for example, when the 5GLAN information authentication or obtaining response message in step S806 does not include the service area information, but step S801 is performed, the 5GLAN ID included in the subscription request message in step S807 may be a 5GLAN ID determined based on the service area restriction indication information in the 5GLAN information authentication or obtaining response message in step S806. For other related descriptions, refer to step S708 in the embodiment shown in FIG. 7. Details are not described herein.

S808 to S810 are the same as steps S709 to S711 in the embodiment shown in FIG. 7. For related descriptions, refer to the embodiment shown in FIG. 7. Details are not described herein.

Based on the foregoing local area network communication method, when one session of the terminal is connected to a plurality of 5GLAN services, communication of the terminal in one or more 5GLANs can be restricted based on a location of the terminal. For analysis of a related technical effect, refer to the communications system part shown in FIG. 1. Details are not described herein.

Actions of the AMF network element or the SMF network element in steps S801 to S810 may be performed, by invoking the application program code stored in the memory 503, by the processor 501 in the communications device 500 shown in FIG. 5. This is not limited in this embodiment.

The foregoing mainly describes the solutions provided in the embodiments of this application from a perspective of interaction between the network elements. It may be understood that, to implement the foregoing functions, the foregoing policy control network element or the foregoing session management network element includes a corresponding hardware structure and/or software module for implementing each function. A person skilled in the art should easily be aware that, in combination with the examples described in the embodiments disclosed in this specification, units and algorithm steps may be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, functional modules in the policy control network element or the session management network element may be obtained through division based on the foregoing method examples. For example, functional modules may be obtained through division based on corresponding functions, or two or more functions may be integrated into one processing module. The integrated module may be implemented in a form of hardware, or may be implemented in a form of a software functional module. It should be noted that, in this embodiment of this application, module division is an example, and is merely a logical function division. In actual implementation, another division manner may be used.

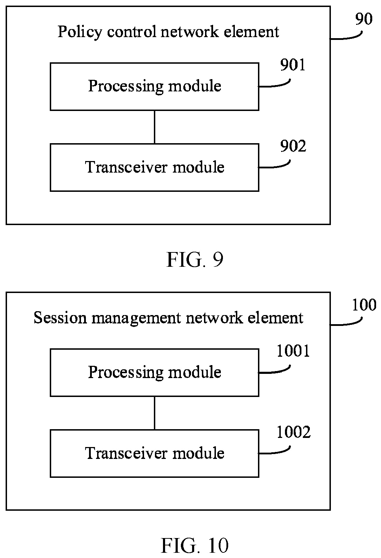

For example, when functional modules are obtained through division in an integrated manner, FIG. 9 is a schematic structural diagram of a policy control network element 90. The policy control network element 90 includes a transceiver module 902 and a processing module 901. The transceiver module 902 is configured to receive a first event report from a session management network element. The first event report includes a first event and indication information of a first local area network, and the first event includes that a terminal moves into or moves out of a service area of the first local area network. The processing module 901 is configured to update, based on the first event and the indication information, a PCC rule corresponding to the terminal. The transceiver module 902 is further configured to send an updated first PCC rule to the session management network element.

Optionally, the transceiver module 902 is further configured to send a first subscription request message to the session management network element. The first subscription request message carries the indication information of the first local area network, and is used to request to subscribe to a mobility event that is of the terminal and that is related to the first local area network.

Optionally, that the processing module 901 is configured to update, based on the first event and the indication information, the first PCC rule corresponding to the terminal includes: determining an address of the terminal based on the indication information, and updating, based on the first event and the address of the terminal, the first PCC rule corresponding to the terminal.

Optionally, that the processing module 901 is configured to update, based on the first event and the indication information, the first PCC rule corresponding to the terminal includes: determining a virtual local area network identifier of the terminal based on the indication information of the first local area network, and updating, based on the first event and the virtual local area network identifier that is of the terminal, the first PCC rule corresponding to the terminal.

All related content of the steps in the foregoing method embodiments may be cited in function descriptions of corresponding functional modules, and details are not described herein again.

In this embodiment, the policy control network element 90 is presented in a form of functional modules obtained through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the policy control network element 90 may be in the form shown in FIG. 5.

For example, the processor 501 in FIG. 5 may invoke the computer-executable instruction stored in the memory 503, so that the policy control network element 90 performs the local area network communication method in the foregoing method embodiments.

Specifically, functions/implementation processes of the transceiver module 902 and the processing module 901 in FIG. 9 may be implemented by the processor 501 in FIG. 5 by invoking the computer-executable instruction stored in the memory 503. Alternatively, a function/an implementation process of the processing module 901 in FIG. 9 may be implemented by the processor 501 in FIG. 5 by invoking the computer-executable instruction stored in the memory 503, and a function/an implementation process of the transceiver module 902 in FIG. 9 may be implemented by the communications interface 504 in FIG. 5.

Because the policy control network element 90 provided in this embodiment can perform the foregoing local area network communication method, for a technical effect that can be achieved by the policy control network element 90, refer to the foregoing method embodiments, and details are not described herein again.

Optionally, an embodiment of this application further provides an apparatus (for example, the apparatus may be a chip system). The apparatus includes a processor, configured to support a policy control network element to implement the foregoing local area network communication method, for example, update, based on the first event and the indication information, the first PCC rule corresponding to the terminal. In a possible design, the apparatus further includes a memory. The memory is configured to store a program instruction and data that are necessary for the policy control network element. Certainly, the memory may alternatively not be in the apparatus. When the apparatus is a chip system, the apparatus may include a chip, or may include a chip and another discrete device. This is not specifically limited in this embodiment of this application.

For example, when functional modules are obtained through division in an integrated manner, FIG. 10 is a schematic structural diagram of a session management network element 100. The session management network element 100 includes a processing module 1001 and a transceiver module 1002.

In a possible implementation,
the transceiver module 1002 is configured to send a first event report to a policy control network element. The first event report includes a first event and indication information of a first local area network, and the first event includes that a terminal moves into or moves out of a service area of the first local area network. The transceiver module 1002 is further configured to receive an updated first PCC rule corresponding to the terminal from the policy control network element. The processing module 1001 is configured to modify a session of the terminal based on the updated first PCC rule.

Optionally, the transceiver module 1002 is further configured to receive a first subscription request message from the policy control network element. The first subscription request message carries the indication information of the first local area network, and is used to request to subscribe to a mobility event that is of the terminal and that is related to the first local area network.

Optionally, that the processing module 1001 is configured to modify the session of the terminal based on the updated first PCC rule includes: if the updated first PCC rule indicates that the terminal is allowed to route data in the first local area network, indicating a user plane function network element to set a first routing rule, where the first routing rule includes an address of the terminal or a virtual local area network identifier of the terminal.

Optionally, the processing module 1001 is further configured to: if the session of the terminal has been deactivated, activate a user plane connection of the session of the terminal.

Optionally, that the processing module 1001 is configured to modify the session of the terminal based on the updated first PCC rule includes: if the updated first PCC rule indicates that the terminal is not allowed to route data in the first local area network, indicating a user plane function network element to delete a first routing rule, where the first routing rule includes an address of the terminal or a virtual local area network identifier of the terminal.

Optionally, the processing module 1001 is further configured to: if the session of the terminal is allowed to access only the first local area network, deactivate a user plane connection of the session of the terminal or directly release the session of the terminal.

In another possible implementation, the transceiver module 1002 is configured to receive a first event report from a mobility management network element. The first event report includes a first event and indication information of a first local area network, and the first event includes that a terminal moves into or moves out of a service area of the first local area network. The processing module 1001 is configured to modify a session of the terminal based on the first event and the indication information of the first local area network.

Optionally, the transceiver module 1002 is further configured to send a first subscription request message to the mobility management network element. The first subscription request message carries the indication information of the first local area network, and is used to request to subscribe to a mobility event that is of the terminal and that is related to the first local area network.

Optionally, that processing module 1001 is configured to modify the session of the terminal based on the first event and the indication information of the first local area network includes: if determining, based on the first event and the indication information of the first local area network, that the terminal is allowed to route data in the first local area network, indicating a user plane function network element to set a first routing rule, where the first routing rule includes an address of the terminal or a virtual local area network identifier of the terminal.

Optionally, the processing module 1001 is further configured to: if the session of the terminal has been deactivated, activate a user plane connection of the session of the terminal.

Optionally, that processing module 1001 is configured to modify the session of the terminal based on the first event and the indication information of the first local area network includes: if determining, based on the first event and the indication information of the first local area network, that the terminal is not allowed to route data in the first local area network, indicating a user plane function network element to delete a first routing rule, where the first routing rule includes an address of the terminal or a virtual local area network identifier of the terminal.

Optionally, the processing module 1001 is further configured to: if the session of the terminal is allowed to access only the first local area network, deactivate a user plane connection of the session of the terminal or directly release the session of the terminal.

All related content of the steps in the foregoing method embodiments may be cited in function descriptions of corresponding functional modules, and details are not described herein again.

In this embodiment, the session management network element 100 is presented in a form of functional modules obtained through division in an integrated manner. The "module" herein may be a specific ASIC, a circuit, a processor and a memory that execute one or more software or firmware programs, an integrated logic circuit, and/or another device that can provide the foregoing functions. In a simple embodiment, a person skilled in the art may figure out that the session management network element 100 may be in the form shown in FIG. 5.

For example, the processor 501 in FIG. 5 may invoke the computer-executable instruction stored in the memory 503, so that the session management network element 100 performs the local area network communication method in the foregoing method embodiments.

Specifically, functions/implementation processes of the transceiver module 1002 and the processing module 1001 in FIG. 10 may be implemented by the processor 501 in FIG. 5 by invoking the computer-executable instruction stored in the memory 503. Alternatively, a function/an implementation process of the processing module 1001 in FIG. 10 may be implemented by the processor 501 in FIG. 5 by invoking the computer-executable instruction stored in the memory 503, and a function/an implementation process of the transceiver module 1002 in FIG. 10 may be implemented by the communications interface 504 in FIG. 5.

Because the session management network element 100 provided in this embodiment can perform the foregoing local area network communication, for a technical effect that can be achieved by the session management network element 100, refer to the foregoing method embodiments, and details are not described herein again.

Optionally, an embodiment of this application further provides an apparatus (for example, the apparatus may be a chip system). The apparatus includes a processor, configured to support a session management network element to implement the foregoing local area network communication, for example, update, based on the first event and the indication information, the first PCC rule corresponding to the terminal. In a possible design, the apparatus further includes a memory. The memory is configured to store a program instruction and data that are necessary for the session management network element. Certainly, the memory may alternatively not be in the apparatus. When the apparatus is a chip system, the apparatus may include a chip, or may include a chip and another discrete device. This is not specifically limited in this embodiment of this application.

All or some of the foregoing embodiments may be implemented by using software, hardware, firmware, or any combination thereof. When a software program is used to implement the embodiments, the embodiments may be implemented completely or partially in a form of a computer program product. The computer program product includes one or more computer instructions. When the computer program instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

Although this application is described with reference to the embodiments, in a process of implementing this application that claims protection, a person skilled in the art may understand and implement another variation of the disclosed embodiments by viewing the accompanying drawings, disclosed content, and the accompanying claims. In the claims, "comprising" (comprising) does not exclude another component or another step, and "a" or "one" does not exclude a meaning of plurality. A single processor or another unit may implement several functions enumerated in the claims. Some measures are recorded in dependent claims that are different from each other, but this does not mean that these measures cannot be combined to produce a better effect.

Although this application is described with reference to specific features and the embodiments thereof, it is clear that various modifications and combinations may be made to them without departing from the scope of this application. Correspondingly, the specification and accompanying drawings are merely example description of this application defined by the accompanying claims, and is considered as any of or all modifications, variations, combinations or equivalents that cover the scope of this application. It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A local area network communication method, wherein the method comprises:
receiving, by a policy control network element, a first event report from a session management network element, wherein the first event report comprises a first event and indication information of a first local area network, and the first event comprises that a terminal moves into or moves out of a service area of the first local area network;
updating, by the policy control network element based on the first event and the indication information, a first policy and charging control PCC rule corresponding to the terminal; and
sending, by the policy control network element, an updated first PCC rule to the session management network element.

2. The method according to claim 1, wherein before the receiving, by a policy control network element, a first event report from a session management network element, the method further comprises:
sending, by the policy control network element, a first subscription request message to the session management network element, wherein the first subscription request message carries the indication information of the first local area network, and is used to request to subscribe to a mobility event that is of the terminal and that is related to the first local area network.

3. The method according to claim 2, wherein the first subscription request message further carries service area information of the first local area network.

4. The method according to any one of claims 1 to 3, wherein the updating, by the policy control network element based on the first event and the indication information, a first PCC rule corresponding to the terminal comprises:
determining, by the policy control network element, an address of the terminal based on the indication information; and
updating, by the policy control network element based on the first event and the address that is of the terminal, the first PCC rule corresponding to the terminal.

5. The method according to any one of claims 1 to 3, wherein the updating, by the policy control network element based on the first event and the indication information, a first PCC rule corresponding to the terminal comprises:
determining, by the policy control network element, a virtual local area network identifier of the terminal based on the indication information of the first local area network; and
updating, by the policy control network element based on the first event and the virtual local area network identifier that is of the terminal, the first PCC rule corresponding to the terminal.

6. A local area network communication method, wherein the method comprises:
sending, by a session management network element, a first event report to a policy control network element, wherein the first event report comprises a first event and indication information of a first local area network, and the first event comprises that a terminal moves into or moves out of a service area of the first local area network;
receiving, by the session management network element, an updated first policy and charging control PCC rule corresponding to the terminal from the policy control network element; and
modifying, by the session management network element, a session of the terminal based on the updated first PCC rule.

7. The method according to claim 6, wherein before the sending, by a session management network element, a first event report to a policy control network element, the method further comprises:
receiving, by the session management network element, a first subscription request message from the policy control network element, wherein the first subscription request message carries the indication information of the first local area network, and is used to request to subscribe to a mobility event that is of the terminal and that is related to the first local area network.

8. The method according to claim 7, wherein the first subscription request message further carries service area information of the first local area network.

9. The method according to any one of claims 6 to 8, wherein the modifying, by the session management network element, a session of the terminal based on the updated first PCC rule comprises:
if the updated first PCC rule indicates that the terminal is allowed to route data in the first local area network, indicating, by the session management network element, a user plane function network element to set a first routing rule, wherein the first routing rule comprises an address of the terminal or a virtual local area network identifier of the terminal.

10. The method according to claim 9, wherein the method further comprises:
if the session of the terminal has been deactivated, activating, by the session management network element, a user plane connection of the session of the terminal.

11. The method according to any one of claims 6 to 8, wherein the modifying, by the session management network element, a session of the terminal based on the updated first PCC rule comprises:
if the updated first PCC rule indicates that the terminal is not allowed to route data in the first local area network, indicating, by the session management network element, a user plane function network element to delete a first routing rule, wherein the first routing rule comprises an address of the terminal or a virtual local area network identifier of the terminal.

12. The method according to claim 11, wherein the method further comprises:
if the session of the terminal is allowed to access only the first local area network, deactivating, by the session management network element, a user plane connection of the session of the terminal or directly releasing the session of the terminal.

13. A policy control network element, wherein the policy control network element comprises a transceiver module and a processing module, wherein
the transceiver module is configured to receive a first event report from a session management network element, wherein the first event report comprises a first event and indication information of a first local area network, and the first event comprises that a terminal moves into or moves out of a service area of the first local area network;
the processing module is configured to update, based on the first event and the indication information, a first policy and charging control PCC rule corresponding to the terminal; and
the transceiver module is further configured to send an updated first PCC rule to the session management network element.

14. The policy control network element according to claim 13, wherein
the transceiver module is further configured to send a first subscription request message to the session management network element, wherein the first subscription request message carries the indication information of the first local area network, and is used to request to subscribe to a mobility event that is of the terminal and that is related to the first local area network.

15. The policy control network element according to claim 13 or 14, wherein that the processing module is configured to update, based on the first event and the indication information, a first PCC rule corresponding to the terminal comprises:
determining an address of the terminal based on the indication information; and updating, based on the first event and the address of the terminal, the first PCC rule corresponding to the terminal.

16. The policy control network element according to claim 13 or 14, wherein that the processing module is configured to update, based on the first event and the indication information, a first PCC rule corresponding to the terminal comprises:
determining a virtual local area network identifier of the terminal based on the indication information of the first local area network; and updating, based on the first event and the virtual local area network identifier that is of the terminal, the first PCC rule corresponding to the terminal.

17. A session management network element, wherein the session management network element comprises a processing module and a transceiver module, wherein
the transceiver module is configured to send a first event report to a policy control network element, wherein the first event report comprises a first event and indication information of a first local area network, and the first event comprises that a terminal moves into or moves out of a service area of the first local area network;
the transceiver module is further configured to receive an updated first policy and charging control PCC rule corresponding to the terminal from the policy control network element; and
the processing module is configured to modify a session of the terminal based on the updated first PCC rule.

18. The session management network element according to claim 17, wherein the transceiver module is further configured to receive a first subscription request message from the policy control network element, wherein the first subscription request message carries the indication information of the first local area network, and is used to request to subscribe to a mobility event that is of the terminal and that is related to the first local area network.

19. The session management network element according to claim 17 or 18, wherein that the processing module is configured to modify the session of the terminal based on the updated first PCC rule comprises:
if the updated first PCC rule indicates that the terminal is allowed to route data in the first local area network, indicating a user plane function network element to set a first routing rule, wherein the first routing rule comprises an address of the terminal or a virtual local area network identifier of the terminal.

20. The session management network element according to claim 19, wherein the processing module is further configured to: if the session of the terminal has been deactivated, activate a user plane connection of the session of the terminal.

21. The session management network element according to claim 17 or 18, wherein that the processing module is configured to modify the session of the terminal based on the updated first PCC rule comprises:
if the updated first PCC rule indicates that the terminal is not allowed to route data in the first local area network, indicating a user plane function network element to delete a first routing rule, wherein the first routing rule comprises an address of the terminal or a virtual local area network identifier of the terminal.

22. The session management network element according to claim 21, wherein the processing module is further configured to: if the session of the terminal is allowed to access only the first local area network, deactivate a user plane connection of the session of the terminal or directly release the session of the terminal.
